(19) Europäisches Patentamt / European Patent Office / Office européen des brevets

(11) **EP 3 156 820 B1**

(12) **EUROPÄISCHE PATENTSCHRIFT**

(45) Veröffentlichungstag und Bekanntmachung des Hinweises auf die Patenterteilung:
**21.08.2024 Patentblatt 2024/34**

(21) Anmeldenummer: **16188966.2**

(22) Anmeldetag: **15.09.2016**

(51) Internationale Patentklassifikation (IPC):
**G01S 15/931** (2020.01)   **G01S 7/539** (2006.01)
**G01S 15/52** (2006.01)   **G01S 15/87** (2006.01)
**G01S 15/66** (2006.01)   **G01S 15/89** (2006.01)

(52) Gemeinsame Patentklassifikation (CPC):
**G01S 15/931; G01S 7/539; G01S 15/52;**
**G01S 15/66; G01S 15/876; G01S 15/89;**
G01S 2015/938

(54) **VERFAHREN ZUM ERFASSEN EINES DYNAMISCHEN OBJEKTS IN EINEM UMGEBUNGSBEREICH EINES KRAFTFAHRZEUGS AUF BASIS VON INFORMATIONEN EINER KRAFTFAHRZEUGSEITIGEN ULTRASCHALL-DETEKTIONSEINRICHTUNG, FAHRERASSISTENZSYSTEM UND KRAFTFAHRZEUG**

METHOD FOR DETECTING A DYNAMIC OBJECT IN A REGION SURROUNDING A MOTOR VEHICLE BASED ON INFORMATION IN A VEHICLE-SIDE ULTRASOUND DETECTION DEVICE, DRIVER ASSISTANCE SYSTEM, AND MOTOR VEHICLE

PROCEDE DE DETECTION D'UN OBJET DYNAMIQUE DANS L'ENVIRONNEMENT D'UN VEHICULE AUTOMOBILE EN FONCTION D'INFORMATIONS PROVENANT D'UN DISPOSITIF DE DETECTION PAR ULTRASONS COTE VEHICULE, SYSTEME D'ASSISTANCE AU CONDUCTEUR ET VEHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2015 DE 102015117379**

(43) Veröffentlichungstag der Anmeldung:
**19.04.2017 Patentblatt 2017/16**

(73) Patentinhaber: **Valeo Schalter und Sensoren GmbH**
**74321 Bietigheim-Bissingen (DE)**

(72) Erfinder:
• **Honer, Jens**
  **74321 Bietigheim-Bissingen (DE)**
• **Michael, Anto**
  **74321 Bietigheim-Bissingen (DE)**
• **Zuther, Sebastian**
  **74321 Bietigheim-Bissingen (DE)**

(74) Vertreter: **Pothmann, Karsten et al**
**Valeo Schalter und Sensoren GmbH**
**CDA-IP**
**Laiernstraße 12**
**74321 Bietigheim-Bissingen (DE)**

(56) Entgegenhaltungen:
**EP-A1- 2 881 755      EP-A2- 2 908 153**
**DE-A1- 102010 034 142**

**Beschreibung**

Die Erfindung betrifft ein Verfahren zum Erfassen eines Objekts in einem Umgebungsbereich eines Kraftfahrzeugs, bei welchem mit zumindest einer kraftfahrzeugseitigen Ultraschall-Detektionseinrichtung der Umgebungsbereich erfasst wird. Des Weiteren betrifft die Erfindung ein Fahrerassistenzsystem und ein Kraftfahrzeug.

Ultraschallsensoren sind in der Kraftfahrzeugtechnik hinlänglich bekannt. Mittels dieser spezifischen Sensortypen wird die Umgebung des Kraftfahrzeugs erfasst und abhängig davon beispielsweise eine geeignete Parklücke erkannt. Bei neueren Anwendungen ist auch vorgesehen, dass auf einer Anzeigeeinheit die Umgebung des Kraftfahrzeugs anhand der durch die Ultraschallsensoren detektierten Informationen wiedergegeben und somit angezeigt wird. Derartige Umgebungskarten können beispielsweise als vektorielle Karten oder als Gitterkarten erzeugt werden. Abhängig von einem Abstand eines kraftfahrzeugseitigen Ultraschallsensors zu einem Objekt ist dann ein spezifischer Freiraum ausgebildet.

Es ist jedoch auch bekannt, dass Ultraschallsensoren in spezifischen Situationen Unwägbarkeiten bezüglich der Detektionsgenauigkeit bzw. Detektionsrate aufweisen. Diese basieren insbesondere auch auf physikalischen Grenzen dieser Ultraschalltechnik. So ist beispielsweise bekannt, dass die Detektionsrate von Objekten mittels Ultraschallsensoren auch von der Formgebung der Objekte abhängt. So können kleinere Objekte verbessert in einem Nahbereich zu den Ultraschallsensoren detektiert werden. Je größer somit entsprechende Objekte sind, umso besser, das heißt "stabiler" und überhaupt, können sie in der Regel auch in einem größeren Abstand zum Ultraschallsensor erfasst werden. Darüber hinaus sind beispielsweise auch sehr eckige Objekte schwieriger durch die Ultraschallsensoren zu erfassen als weniger eckige.

Darüber hinaus ist auch die Position des Ultraschallsensors zum zu detektierenden Objekt ein Aspekt, der auf die Detektionsgenauigkeit bzw. die Detektionsrate einwirkt. Eine sehr genaue Detektion ist beispielsweise dann erreichbar, wenn eine Hauptachse des Ultraschallsensors und somit einer ausgesandten Ultraschallkeule möglichst senkrecht zum zu detektierenden Objekt orientiert ist. Somit wird die Detektionsgenauigkeit schlechter, je spitzer ein Winkel zwischen einem einfallenden Ultraschallsignal und dem zu detektierenden Objekt ist. Ein Ultraschallsensor misst radial und ist daher betreffend der Winkelgenauigkeit ungenau.

Es ist mit Ultraschallsignalen auch nicht möglich, durch ein Objekt quasi hindurchzublicken, wie dies beispielsweise bei Röntgenstrahlen der Fall ist. Daraus kann sich die Situation ergeben, dass zwar kein hohes Objekt zwischen einem Ultraschallsensor und einem detektierten Objekt auftreten kann, allerdings diesbezüglich sehr niedrige Objekte zwischen dem Ultraschallsensor und dem erfassten Objekt angeordnet sein können, die dann jedoch nicht erfasst werden.

Des Weiteren ist es mit Ultraschallsensoren nicht möglich, eine relative Geschwindigkeit eines Objekts, welches sich im Wesentlichen senkrecht zu der oben genannten Sensorhauptachse bewegt, genau zu erfassen. Dies kann beispielsweise bei Objekten auftreten, die sich an der Seite zu einem Kraftfahrzeug bewegen, es kann jedoch auch dann auftreten, wenn Objekte die Fahrtrichtung des Kraftfahrzeugs queren. Dadurch können dynamische Objekte durch Ultraschallsensoren bisher nicht erkannt werden.

Aufgrund dieser technischen Limitierungen von Ultraschallsensoren tritt bei herkömmlichen Ausgestaltungen das Problem auf, dass auf erzeugten Umgebungskarten Objekte fälschlich angezeigt werden und/oder im Hinblick auf das bereits erfolgte weitere Fortbewegen des Kraftfahrzeugs im Vergleich zu einer aktuell angezeigten Umgebungskarte Objekte örtlich anderweitig sich ergeben oder nicht mehr aktuell sind. Bei der herkömmlichen Anzeige von Objekten in einer digitalen Umgebungskarte sind daher diesbezüglich entsprechende Unwägbarkeiten vorhanden. Insbesondere wird dabei dann ein eigentlich dynamisches Objekt dann fälschlich als mehrere, quasi auf einer Bahn angeordnete, statische Objekte angezeigt und diese Mehrzahl wird dann auch auf der ausgegebenen und somit auf einer Anzeigeeinheit angezeigten Umfeldkarte dargestellt. Dies führt dann zu einer falschen Widergabe der tatsächlichen Umgebungsverhältnisse, was auch zu falschen Einschätzungen des Fahrerassistenzsystems führen kann. Des Weiteren ist diese angezeigte Umfeldkarte dann auch für einen Beobachter nur teilweise hilfreich.

DE 10 2010 034 142 A1 betrifft ein Verfahren und Fahrerassistenzsystem zum Unterstützen eines Fahrers beim Führen eines Kraftfahrzeugs, bevorzugt zum Unterstützen eines Parkvorgangs des Kraftfahrzeugs.

EP 2 908 153 A2 und EP 2 881 755 A1 zeigen jeweils eine Vorrichtung zur Erkennung eines dynamischen Objekts im Umfeld eines Kraftfahrzeugs mittels Ultraschallsensoren.

Es ist Aufgabe der vorliegenden Erfindung, ein Verfahren sowie ein Parkassistenzsystem zu schaffen, bei welchem beziehungsweise mit welchem ein dynamisches Objekt in der Umgebung eines Kraftfahrzeugs aus Informationen einer Ultraschallsensoreneinrichtung erkannt wird bzw. ein solches Verfahren und Parkassistenzsystem zu verbessern.

Erfindungsgemäß wird die Aufgabe wird durch den Gegenstand der anhängenden unabhängigen Patentansprüche gelöst. Die abhängigen Ansprüche stellen vorteilhafte Ausgestaltungen dar.

Bei einem erfindungsgemäßen Verfahren wird zumindest ein Objekt in einem Umgebungsbereich eines Kraftfahrzeugs erfasst. Dazu weist das Kraftfahrzeug zumindest eine Ultraschall-Detektionseinrichtung eines Parkassistenzsystems auf. Mit dieser Ultraschall-Detektionseinrichtung wird dieser Umgebungsbereich des Kraftfahrzeugs erfasst. Zu zumindest zwei verschiedenen Zeitpunkten wird jeweils ein Erfassungszyklus zum Erfassen des Umgebungsbereichs mit der Ultraschall-Detektionseinrichtung durchgeführt. Die in den beiden Erfassungszyklen erfassten Ultraschall-Informationen über ein zumindest vermeintliches Objekt in dem Umgebungsbereich werden einem Beurteilungsmodell, welches insbesondere in einer Auswerteeinheit eines Fahrerassistenzsystems des Kraftfahrzeugs abgelegt ist, zugeführt beziehungsweise diesem bereitgestellt. Mit dem Beurteilungsmodell wird abhängig von diesen Informationen der Ultraschall-Detektionseinrichtung beurteilt, ob das Objekt als ein dynamisches Objekt klassifiziert wird. Es ist daher nunmehr auch möglich, auf Basis von Ultraschallinformationen eine Aussage darüber treffen zu können, ob ein Objekt in einem Umgebungsbereich des Kraftfahrzeugs ein statisches oder ein dynamisches Objekt ist. Es wird daher auch in relativ einfacher Art und Weise eine sehr genaue Möglichkeit bereitgestellt, um in der Umgebung zumindest vermeintlich detektierte Objekte als statisches Objekt oder als dynamisches Objekt unterscheiden zu können. Damit kann auf Basis von auch bisher bereits bekannten Ultraschallsensoren eine wesentlich umfänglichere und genauere Analyse des Umgebungsbereichs im Hinblick von darin befindlichen Objekten erfolgen. Die daraus wiederum erhaltenen genaueren Informationen bezüglich einer Detektion eines statischen Objekts oder eines dynamischen Objekts lassen wiederum genauere und situationsgerechtere Beurteilungen und Handlungsweisen eines Fahrerassistenzsystems zu.

Erfindungsgemäß wird eine Parklücke als geeignet erkannt, wenn ein innerhalb dieser Parklücke detektiertes Objekt als dynamisch klassifiziert und erkannt wird. Dieses dynamische Objekt wird weiterverfolgt, und es wird erkannt, in welche Richtung es sich bewegt. Auf Basis der bereits ebenfalls detektierten, weiteren Begrenzungen der vermeintlichen Parklücke wird eine Vorhersage getroffen, wann das dynamische Objekt die Parklücke ausreichend verlassen hat, dass ein Einparken des Kraftfahrzeugs möglich ist.

In dem Zusammenhang ist es daher nunmehr möglich, dass bei einem als Parkassistenzsystem ausgebildeten Fahrerassistenzsystem eine Parklücke als geeignet erkannt wird, wenn ein innerhalb dieser Parklücke detektiertes Objekt als dynamisch klassifiziert und erkannt werden kann. Denn dann kann das Fahrerassistenzsystem wiederum mit hoher Wahrscheinlichkeit davon ausgehen, dass das dynamische Objekt den Bereich der Parklücke in einer zumindest absehbaren und vertretbaren Zeitdauer verlassen wird und dann das eigene Kraftfahrzeug in diese Parklücke eingeparkt werden kann. Gerade derartige Aussagen waren mit bisherigen Parkassistenzsystemen, die auf Basis von Ultraschallsensoren eine Parklücke für geeignet oder nicht geeignet beurteilt haben, nicht möglich. Da bisher eben nur statische Objekte detektiert waren, unabhängig davon, ob sie in der Realität jedoch dynamisch waren, wurden derartige Parklücken bisher als nicht geeignet abgelehnt.

Gerade in dem Zusammenhang ist dann vorgesehen, dass bei einer Detektion eines dynamischen Objekts auf Basis dieser Ultraschallsensorinformationen dieses dynamische Objekt weiterverfolgt wird und dann auch erkannt wird, in welche Richtung es sich weiterbewegt. In dem Zusammenhang wird dann auch auf Basis der bereits ebenfalls detektierten, weiteren Begrenzungen der vermeintlichen Parklücke eine Vorhersage getroffen, wann das dynamische Objekt die Parklücke derart ausreichend verlassen hat, dass ein Einparken des Kraftfahrzeugs möglich ist. Auch dadurch wird insbesondere ein Parkassistenzsystem weiterhin verbessert, da auch dann relativ schnell abgeschätzt werden kann, ob in einer vertretbaren Zeit das dynamische Objekt die Parklücke verlassen wird. Ein unnötig langes Warten, bis ein vermeintlich doch relativ langsames dynamisches Objekt die Parklücke verlässt, kann dadurch verhindert werden. So kann in dem Zusammenhang vorgesehen sein, dass eine Parklücke auch dann als geeignet angegeben und erkannt wird, wenn abhängig von den Informationen über das dynamische Objekt und/oder bezüglich zumindest vorhergesagter Informationen über die Richtung und/oder die Geschwindigkeit des weiteren Fortbewegens dieses dynamischen Objekts ein Vergleich mit einem Zeitdauer-Schwellwert erfolgen kann. Ist die dann geschätzte Zeitdauer, bis zu welcher das dynamische Objekt die Parklücke verlassen haben wird, kleiner als dieser Zeitdauer-Schwellwert, so wird die Parklücke als geeignet angeboten.

Vorzugsweise wird abhängig von als Informationen eines Erfassungszyklus und eines weiteren Erfassungszyklus erfassten Erfassungspunkten zumindest ein ein durch das Beurteilungsmodell generiertes, modelliertes vorläufiges dynamisches Objekt charakterisierter Zustandsvektor erzeugt. Insbesondere abhängig von dem zumindest einen Zustandsvektor wird durch das Beurteilungsmodell zumindest ein weiterer, zukünftig zu erwartender Erfassungspunkt vorhergesagt, der für die Beurteilung des Objekts im Umgebungsbereich als dynamisches Objekt berücksichtigt wird.

Da ein Messsystem bzw. eine Ultraschall-Detektionseinrichtung zu einem einen Erfassungszyklus durchführenden ersten Zeitpunkt nach einem begonnen Beurteilungsszenario zum Beurteilen, ob ein Objekt in einem Umgebungsbereich des Kraftfahrzeugs dynamisch oder statisch ist, noch keine dynamischen Objekte erfasst bzw. zuerkannt hat, wird auch im Zeitintervall zwischen dem ersten Zeitpunkt und einem nachfolgenden weiteren Zeitpunkt, zu dem dann ein weiterer Erfassungszyklus durchgeführt werden kann, noch keine Assoziation von Erfassungspunkten und kein Update bzw. keine Aktualisierung von Erfassungspunkten durchgeführt.

Diese Hypothesen bzw. Erfassungspunkte werden vorzugsweise aber verwendet, um neue dynamische Objekte durch das Beurteilungsmodell zu generieren. Dazu werden vorzugsweise Bedingungen insbesondere aller Paarungen dieser Hypothesen bzw. Erfassungspunkte geprüft. Eine Bedingung kann sein, dass ein Abstand der Erfassungspunkte zueinander kleiner einem vorgegebenem maximalem Abstandschwellwert ist. Eine weitere Bedingung kann sein, dass ein Abstand der Erfassungspunkte zueinander größer einem vorgegebenem minimalem Abstandsschwellwert ist. Ein weitere Bedingung kann sein, dass eine resultierende Geschwindigkeit der Erfassungspunkte zueinander kleiner einem vorgegebenen maximalen Geschwindigkeits-Schwellwert ist.

Ein Abstandsschwellwert ist hierbei vorzugsweise ein Radius einer Beurteilungszone, die um einen zum ersten Zeitpunkt erfassten Erfassungspunkt gebildet ist.

Vorzugsweise wird um zumindest einen zukünftig zu erwartenden Erfassungspunkt eine Beurteilungszone erzeugt und es wird überprüft ob zu einem auf die beiden Zeitpunkte folgenden weiteren Zeitpunkt zumindest ein in einem auf die beiden ersten Erfassungszyklen folgenden weiteren Erfassungszyklus erfasster Erfassungspunkt in der Beurteilungszone liegt, wobei im Falle, dass ein erfasster Erfassungspunkt des weiteren Erfassungszyklus innerhalb der Beurteilungszone liegt, dieser Erfassungspunkt als dynamisch klassifiziert wird, und für die Beurteilung des Objekts im Umgebungsbereich als dynamisches Objekt berücksichtigt wird.

Insbesondere wird die Wahrscheinlichkeit für das Vorhandensein eines dynamischen Objekts erhöht, wenn das Objekt durch den Erfassungspunkt in der Beurteilungszone und den Erfassungspunkten des einen und des weiteren Erfassungszyklus, auf Basis derer zumindest ein Zustandsvektor erzeugt wird, von welchem abhängig der zukünftig zu erwartende Erfassungspunkt erzeugt wird, charakterisiert wird.

Bevorzugt wird um den zu erwartenden Erfassungspunkt eine erste Beurteilungszone erzeugt und bei einem auf den zweiten Zeitpunkt folgenden weiteren Zeitpunkt wird ein weiterer Erfassungszyklus durchgeführt. Bei einem Vorhandensein von zumindest zwei Erfassungspunkten des zu dem weiteren Zeitpunkt durchgeführten weiteren Erfassungszyklus in der weiteren Beurteilungszone werden die beiden Erfassungspunkte abhängig von deren jeweiligen Abstand zu dem erwarteten Erfassungspunkt gewichtet und aus den gewichteten Erfassungspunkten wird ein gemittelter Erfassungspunkt bestimmt.

Vorzugsweise wird bei einem Erfassen von als erfasste Erfassungspunkte in einem Erfassungszyklus erhaltenen Informationen und bei einem Erfassen von als weitere erfasste Erfassungspunkte in einem weiteren Erfassungszyklus erhaltenen Informationen aus jeweils einem Erfassungspunkt des einen Erfassungszyklus und einem Erfassungspunkt des weiteren Erfassungszyklus ein dadurch charakterisiertes dynamisches Objekt initialisiert, und aus den charakterisierten dynamischen Objekten wird ein dynamisches Repräsentanz-Objekt erzeugt. Insbesondere wird auf Basis des dynamischen Repräsentanz-Objekts bei dem Vorhandensein eines bis dahin im Beurteilungsszenario vorklassifizierten dynamischen Objekts ein zukünftig zu erwartender Erfassungspunkt bestimmt, und das Repräsentanz-Objekt wird bei der Beurteilung des Objekts im Umgebungsbereich als dynamisches Objekt berücksichtigt. Eine derartige Bündelung zu einem Repräsentanz-Objekt minimiert dann auch den weiteren Aufwand für das Bearbeitungsmodell, einen oder mehrere zukünftig zu erwartende Erfassungspunkte zu bestimmen. Denn es muss dann nur noch auf Basis dieses einen Repräsentanz-Objekts eine derartige Vorhersage durchgeführt werden. Des Weiteren wird ein Konkurrieren von Erfassungspunkten zur Zuordnung zu initialisierten dynamischen Objekten vermieden, wodurch auch die Aussagegenauigkeit erhöht wird und fehlerhafte Zuordnungen reduziert werden.

Vorzugsweise wird um einen Erfassungspunkt eines Erfassungszyklus eine Beurteilungszone erzeugt und es wird überprüft, ob ein weiterer Erfassungspunkt dieses Erfassungszyklus innerhalb der Beurteilungszone liegt, wobei diese Erfassungspunkte als dynamisch klassifiziert werden, wenn sie innerhalb der Beurteilungszone liegen, wobei abhängig von den dynamischen Erfassungspunkten das Objekt im Umgebungsbereich als dynamisches Objekt in einer Vorklassifikationsstufe des Beurteilungsmodells vorklassifiziert wird.

Insbesondere wird um einen Erfassungspunkt eines Erfassungszyklus eine Beurteilungszone erzeugt und es wird überprüft, ob ein Erfassungspunkt eines weiteren Erfassungszyklus in der Beurteilungszone liegt, wobei die Erfassungspunkte als statisch beurteilt werden, wenn sie innerhalb der Beurteilungszone liegen, wobei diese statischen Erfassungspunkte bei der Beurteilung des Objekts im Umgebungsbereich als dynamisches Objekt in einer Vorklassifikationsstufe des Beurteilungsmodells unberücksichtigt bleiben. Insbesondere werden diese statischen Erfassungspunkte jedoch abgespeichert und werden bei einem nachfolgenden Beurteilungsschritt abhängig von den Bedingungen des nachfolgenden Beurteilungsschritt wieder berücksichtigt.

Vorzugsweise werden die Erfassungspunkte nur dann als statische Erfassungspunkte vorklassifiziert, wenn sich kein bereits vorhandenes, insbesondere mit durch das Beurteilungsmodell geändertes und ausreichender Güte bewertetes, initialisiertes dynamisches Objekt innerhalb eines vorgegeben Umgebungsbereichs um die Erfassungspunkte befindet.

Bevorzugt wird ein als statisch vorklassifizierter Erfassungspunkt in einem weiteren nachfolgenden Beurteilungsschritt in einen dynamischen Erfassungspunkt geändert, wenn in dem nachfolgenden Beurteilungsschritt, insbesondere bei einem eine Beurteilung auf Basis von in einem auf den Klassifikationsschritt als statischer Erfassungspunkt folgenden weiteren Erfassungszyklus durchführenden nachfolgenden Beurteilungsschritt, ein mit einer einen Güte-Schwellwert übersteigenden Güte initialisiertes dynamisches Objekt innerhalb eines Umgebungsbereichs um den Erfassungspunkt erkannt wird.

Vorzugsweise ist vorgesehen, dass mit dem Begin eines Beurteilungsszenarios zu einem ersten und einem nachfolgenden zweiten Zeitpunkt jeweils ein Erfassungszyklus durchgeführt wird, und dabei erfasste Erfassungspunkte dahingehend durch das Beurteilungsmodell bewertet werden, ob sie als dynamische Erfassungspunkte zu klassifizieren sind. Wird in derartigen Anfangs-Erfassungszyklen jeweils zumindest ein dynamischer Erfassungspunkt erhalten, so kann durch das Beurteilungsmodell in bevorzugter Ausführung ein dann vorläufiges durch das Beurteilungsmodell generiertes dynamisches Objekt initialisiert werden. Durch diese vorteilhafte Ausführung werden dann neben den Erfassungspunkten auch bereits angenommene dynamische Objekte für die weitere Beurteilung bereitgestellt, wodurch die Zuordnung von in zumindest einem zukünftigen Erfassungszyklus erhaltenen Erfassungspunkten als dynamisch präzisiert werden kann und/oder die Aussage und Bestätigung des generierten dynamischen Objekts präziser erfolgen kann, insbesondere dahingehend, ob tatsächlich eine korrekte Generierung eines dynamischen Objekts erfolgt ist oder dies nicht zutrifft Dies präzisiert und verbessert somit dann auch das gesamte Beurteilungsszenario dahingehend, ob das im Umgebungsbereich tatsächlich vorhandene Objekt ein dynamisches Objekt ist.

Die oben genannten allgemeinen vorteilhaften Ausführungen werden durch die nachfolgenden weiteren Erläuterungen spezifiziert und/oder ergänzt und dazu weitere Vorteile genannt.

In vorteilhafter Weise wird zur Beurteilung des Objekts als dynamisches Objekt mit dem Beurteilungsmodell abhängig von den Informationen des ersten und des zweiten Erfassungszyklus zumindest ein Zustandsvektor zwischen einem Erfassungspunkt des ersten Erfassungszyklus und einem Erfassungspunkt des zweiten Erfassungszyklus erzeugt. Es kann abhängig von dem zumindest einen Zustandsvektor durch das Beurteilungsmodell zumindest ein weiterer zukünftig zu erwartender Erfassungspunkt, insbesondere örtlich, bestimmt bzw. vorhergesagt werden. Eine derartige zukünftige mögliche Position des Erfassungspunkts und somit eine entsprechende Prädiktion verbessert die Beurteilung dahingehend, ob ein Objekt statisch oder dynamisch ist, wesentlich. Da eine derartige Vorhersage auch relativ genau erfolgen kann, lässt sich dann auch unverzüglich und relativ schnell eine Aussage darüber treffen, ob ein weiterer, gegebenenfalls dann vorhandener Erfassungspunkt auch tatsächlich im Bereich des zu erwartenden Erfassungspunkts liegt. Mit einem derartigen Zustandsvektor, der insbesondere eine örtliche Position und auch eine Fortbewegungsgeschwindigkeit als Information beinhaltet, lässt sich auch eine sehr präzise Modellierung der Umgebungssituation auf Basis der bereits detektierten Informationen und einer darauf aufbauenden Modellierung der zukünftig zu erwartenden Situation darstellen.

Es wird also bei dieser vorteilhaften Ausführung das Beurteilungsmodell dahingehend zugrundegelegt, dass nicht nur eine Ist-Aussage auf Basis der vorhandenen gemessenen und erfassten Informationen erfolgt, sondern dass zusätzlich dann auch eine Vorhersage für die Zukunft getätigt wird, die es dann einfacher macht, die damit gegebenenfalls vorhandenen und erfassten weiteren tatsächlichen Erfassungspunkte zu beurteilen, insbesondere auf Basis der mit dem Beurteilungsmodell vorhergesagten zukünftigen Informationen zu beurteilen.

Bei einer weiteren vorteilhaften Ausführung wird bei der Beurteilung eines Objekts als dynamisches Objekt auf Basis des Beurteilungsmodells um einen Erfassungspunkt des ersten Erfassungszyklus eine erste Beurteilungszone erzeugt. Das mit dem zumindest einen ersten Erfassungspunkt als vermeintlich dynamisches Objekt detektierte Objekt wird in einer ersten Vorklassifikationsstufe vorklassifiziert, wenn ein Erfassungspunkt des zweiten Erfassungszyklus außerhalb dieser Beurteilungszone liegt.

Eine Beurteilungszone wird als geschlossener Bereich um den Erfassungspunkt gebildet und kann beispielsweise ein Kreis oder eine Ellipse sein. Insbesondere kann in dem Zusammenhang beispielsweise auf Basis des Mahalanobis-Abstands eine entsprechende Beurteilungszone um diesen Erfassungspunkt gebildet werden. Dies ist dahingehend eine vorteilhafte Ausführung, denn mit einer derartigen ersten Beurteilungszone wird auch eine gewisse positionelle Unschärfe des Erfassungspunkts berücksichtigt. Darüber hinaus kann durch eine entsprechende Größe der Beurteilungszone, insbesondere dann abhängig von der Genauigkeit der verwendeten Ultraschall-Detektionseinrichtung und/oder weiterer Parameter, wie beispielsweise individueller Objektgeometrien, Kraftfahrzeugparametern etc., die Beurteilungszone so gestaltet werden, dass eine hinreichend genaue Aussage über ein dynamisches oder ein statisches Objekt gegeben werden kann. Denn wird diese Beurteilungszone geometrisch, insbesondere anhand der oben genannten Abhängigkeiten, vorgegeben, kann mit ausreichend genauer Wahrscheinlichkeit ausgesagt werden, ob es sich um ein statisches oder dynamisches Objekt handelt. Denn gerade durch eine derartig spezifizierte erste Beurteilungszone ist dann auch mit entsprechend ausreichender Wahrscheinlichkeit das Objekt zunächst als dynamisch vorzuklassifizieren, wenn der Erfassungspunkt des zweiten Erfassungszyklus außerhalb der Beurteilungszone liegt. Denn dann kann mit entsprechender Wahrscheinlichkeit, die für die Vorklassifikation ausreicht, angenommen werden, dass in der Zeitdauer zwischen den beiden Erfassungszyklen eine derartig große Fortbewegung des Objekts stattgefunden hat, die im Hinblick auf mögliche Ausmaße des Objekts dann nicht mehr als derartige Messpunkte beziehungsweise Erfassungspunkte angesehen werden können, die an anderer Stelle eines statischen Objekts detektiert wurden.

Vorzugsweise wird zur Beurteilung des Objekts als dynamisches Objekt mit dem Beurteilungsmodell und zumindest einem zukünftig zu erwartenden Erfassungspunkt, der mit dem Beurteilungsmodell vorhergesagt wird, eine zweite Beurteilungszone erzeugt. Es wird dann überprüft, ob zu einem auf die beiden ersten Zeitpunkte folgenden dritten Zeitpunkt zumindest ein in einem dritten Erfassungszyklus der Ultraschall-Detektionseinrichtung erfasster Erfassungspunkt in der zweiten Beurteilungszone liegt. In einer diesbezüglich vorteilhaften Weise wird das Vorhersageverfahren im Rahmen des Beurteilungsmodells dahingehend somit mit einer gewissen Unschärfe versehen, dass der vorhergesagte Erfassungspunkt nicht als allein gültiger angesehen wird. Durch diese zweite Beurteilungszone wird somit eine gewisse Abweichung eines tatsächlich erfassten Erfassungspunkts im dritten Erfassungszyklus zu diesem durch das Beurteilungsmodell simulativ vorhergesagten Erfassungspunkt erlaubt. Auch im Rahmen derartiger Abweichungen eines tatsächlich erfassten Erfassungspunkts des dritten Erfassungszyklus zu dem dann vorhergesagten Erfassungspunkt im Rahmen innerhalb dieser zweiten Beurteilungszone ermöglicht dann eine weitere, dann genauere Aussage dahingehend, ob dann dieses detektierte und verfolgte Objekt ein dynamisches Objekt ist.

Insbesondere wird somit durch diese Vorgehensweise eine Situation geschaffen, bei welcher auf Basis der vorhergehenden Informationen durch die Erfassungspunkte eine Vorhersage für die Zukunft bezüglich einer zu erwartenden weiteren Fortbewegung des Objekts, wenn es denn ein dynamisches Objekt wäre, erreicht wird, und es wird dazu eine gestufte und somit quasi kaskadierte Präzision der Beurteilung, ob das Objekt dynamisch ist, vorgenommen. Es wird somit durch diese Vorgehensweise mit dem Beurteilungsmodell fortwährend die Beurteilung und somit die Aussagegenauigkeit über ein vermeintliches dynamisches Objekt erhöht. Indem in dem Zusammenhang bei zukünftigen Erfassungszyklen die vorhergehenden Erfassungszyklen und damit erhaltenen Informationen zumindest teilweise für eine dann wiederum erfolgende zukünftige Vorhersage eines zu erwartenden Erfassungspunkts berücksichtigt werden, wird hier quasi mit jedem zusätzlichen Erfassungszyklus die Genauigkeit der Aussage über ein Objekt, ob es dynamisch ist oder nicht, präzisiert.

In einer vorteilhaften Ausführung wird somit die Wahrscheinlichkeit für das Vorhandensein eines dynamischen Objekts erhöht, wenn das Objekt durch den Erfassungspunkt in der zweiten Beurteilungszone und den Erfassungspunkten des ersten und des zweiten Erfassungszyklus, auf Basis derer ein Zustandsvektor erzeugt wird, von welchem abhängig der zukünftig zu erwartende Erfassungspunkt durch das Beurteilungsmodell bestimmt wird, charakterisiert wird. Dies kann insbesondere dann auch eine im Rahmen der Vorklassifikation durchgeführte zweite Vorklassifikationsstufe sein. Dies dann, wenn eine endgültige Beurteilung im Nachfolgenden dann zumindest auf Basis dieser bisher gewonnenen Informationen und einer weiteren durch das Beurteilungsmodell durchgeführten Vorhersage eines wiederum zu erwartenden Erfassungspunkts erfolgt, und dann wiederum gegebenenfalls vorzugsweise eine weitere Beurteilungszone um diesen weiteren vorhergesagten, zu erwartenden Erfassungspunkt gebildet wird und dann wiederum gegebenenfalls erhaltene tatsächliche Erfassungspunkte in einem zeitlich wiederum nachfolgenden Erfassungszyklus diesbezüglich verglichen werden. Auch hier wird dann überprüft, ob zumindest ein derartiger weiterer Erfassungspunkt innerhalb dieser weiteren Beurteilungszone liegt. Ist dies der Fall, wird die Vorhersage über das Objekt, ob es dynamisch ist, weiter präzisiert beziehungsweise die Wahrscheinlichkeit des Vorhandenseins eines dynamischen Objekts weiter erhöht. Ist an dieser Stelle dann die Beurteilung als abgeschlossen anzusehen beziehungsweise wird dann die Beurteilung beendet, so wird mit entsprechender Genauigkeit von dann einem dynamischen Objekt gesprochen.

Bei einer weiteren vorteilhaften Ausführung des erfindungsgemäßen Verfahrens wird um den zu erwartenden Erfassungspunkt, wie er insbesondere abhängig von zumindest einem auf Basis von Erfassungspunkten des ersten und des zweiten Erfassungszyklus gebildet wurde, eine Beurteilungszone erzeugt und bei einem auf den zweiten Zeitpunkt folgenden dritten Zeitpunkt ein dritter Erfassungszyklus durchgeführt. Bei einem Vorhandensein von zumindest zwei Erfassungspunkten des dritten Erfassungszyklus wird in der weiteren Beurteilungszone ein Gewichten dieser zumindest zwei Erfassungspunkte durchgeführt. Insbesondere wird diese Gewichtung abhängig von dem jeweiligen Abstand eines diesbezüglich erhaltenen Messpunkts beziehungsweise Erfassungspunkts zu dem vorhergesagten erwarteten Erfassungspunkt durchgeführt. Aus den gewichteten Erfassungspunkten wird dann ein gemittelter Erfassungspunkt bestimmt. Dies ist dahingehend eine sehr vorteilhafte Ausführung, da es bei relativ komplexen Objekten, wie beispielsweise bei Menschen oder Tieren, die sich bewegen, an unterschiedlichen Stellen zu Reflexionen des Ultraschallsignals kommen kann und dadurch auch eine gewisse örtliche Streuung auftreten kann, die es erschwert, eine Beurteilung dahingehend abzugeben, ob das Objekt dynamisch oder statisch ist. Beispielsweise kann dies dann auftreten, wenn eine Person einen Arm hochhebt oder zur Seite zeigt oder beim Gehen die Füße dann unterschiedliche Positionen zum Rumpf dynamisch erreichen. Um derartige Situationen ebenfalls mit dem Beurteilungsmodell bestmöglich abzubilden und die Aussagegenauigkeit auch bei derartigen komplexen Geometrien von Objekten in der Umgebung höchstgenau durchzuführen, werden dann in dieser Beurteilungszone erhaltene mehrere Erfassungspunkte durch den Gewichtungsprozess in gewissem Maße ausgeglichen. Indem in dem Zusammenhang mehrere, insbesondere alle Erfassungspunkte innerhalb dieser zweiten Beurteilungszone berücksichtigt werden, können auch gewisse Ausreißer von Erfassungspunkten, die relativ weit vom zu erwartenden Erfassungspunkt weg sind, dennoch dann durch die Gewichtung kompensiert werden und im Rahmen der Gewichtung und dem dann tatsächlichen Auftreten eines Abstands des gewichteten gemeinsamen Erfassungspunkts, der durch den gemittelten Erfassungspunkt bestimmt wird, zum vorhergesagten beziehungsweise erwarteten Erfassungspunkt eine verbesserte Aussage erfolgen. Dies insbesondere im Hinblick darauf, wie auch dann die geometrische Ausdehnung des Objekts, insbesondere des dann als mit höherer Wahrscheinlichkeit zu beurteilenden dynamischen Objekts, ist.

Bei jedem Erfassungszyklus, bei dem ein Erfassungspunkt für die Beurteilung, ob ein Objekt dynamisch ist, assoziiert wird, und das Objekt als dynamisch charakterisiert wird, wird vorzugsweise eine Aussagegüte bezüglich des tatsächlichen Vorhandenseins eines dynamischen Objekts erhöht, und der Beurteilungsstatus über das Objekt wird aktualisiert. Dies ist dahingehend vorteilhaft, dass bei jedem zusätzlichen Aussageschritt, wenn in dem Zusammenhang wiederum zu erwartende Erfassungspunkte vorhergesagt wurden und weitere tatsächliche Erfassungspunkte beziehungsweise Messpunkte erhalten wurden, ein quasi "Update" erfolgt. Es liegt somit quasi dann immer eine äußerst genaue und den aktuellen Informationen gerecht werdende Beurteilung über einen Bewegungszustand eines zumindest vermeintlich detektierten Objekts vor.

Vorzugsweise wird ein Erfassungspunkt, der ein Objekt als statisch vorklassifiziert, abhängig von einer Zuordnung zumindest eines Erfassungspunkts in zumindest einem zeitlich nachfolgenden Erfassungszyklus als ein dann das Objekt dynamisch vorklassifizierender Erfassungspunkt überschrieben, wenn auch ein Bestätigungswert dieses Beurteilungswechsels einen Bestätigungsschwellwert übersteigt. Eine derartige Vorgehensweise im Rahmen des Beurteilungsmodells ist dahingehend besonders vorteilhaft, dass eine einmal getätigte Beurteilung für ein Objekt, ob es statisch oder dynamisch ist, im Laufe der weiteren Beurteilung auch geändert werden kann. Dies ist vorteilhaft, da somit zumindest gegebenenfalls in der Vergangenheit vorliegende Ungenauigkeiten bezüglich der tatsächlich erhaltenen Erfassungspunkte und/oder bezüglich der zu erwartenden Erfassungspunkte und/oder bezüglich der Ausgestaltung der Beurteilungszonen berichtigt werden können. Gerade die Beurteilung für dynamische Objekte ist dadurch wesentlich verbessert. Denn die im Rahmen von Wahrscheinlichkeiten getroffenen Beurteilungen und Aussagen über den Zustand eines Objekts, nämlich ob es statisch oder dynamisch ist, sind dann nicht unumstößlich, sondern können entsprechend korrigiert werden. Gerade dadurch, dass bei dieser Umklassifikation auf Basis von Bestätigungswerten und diesbezüglich zugrundegelegten und vorgegebenen Betätigungsschwellwerten gearbeitet wird, kann durch diese modellierten Vorgaben auch mit sehr hoher Präzision ein derartiger Beurteilungswechsel eingeschätzt werden. Es wird in dem Zusammenhang daher nicht willkürlich von einer Aussage, dass ein Objekt statisch wäre, auf die Aussage, dass ein Objekt dynamisch wäre, gewechselt sondern nur, wenn hierfür tatsächlich faktisch eine ausreichende Begründung auf Basis des Betätigungswerts und des Schwellwerts vorliegt.

Vorzugsweise wird ein Objekt im Rahmen des Beurteilungsmodells final dann tatsächlich als dynamisch beurteilt, wenn es mit einem Wert, insbesondere größer oder gleich 5, größer einem Klassifikationsschwellwert als dynamisch vorklassifiziert wird. Dies bedeutet somit, dass bei einer vorteilhaften Ausführung nicht bereits nach einer ersten Einschätzung oder Beurteilung, die beispielsweise nur auf Basis von Erfassungspunkten eines ersten und eines zweiten Erfassungszyklus erfolgt, eine finale Klassifikation erfolgt, sondern dass hier ein mehrstufiger Vorklassifikationsprozess durchgeführt wird und somit stufenweise dann auch eine Aussagewahrscheinlichkeit, dass ein Objekt tatsächlich dynamisch ist, erhöht wird. Da dann bei einer derartigen vorteilhaften Ausführung auch, insbesondere vorzugsweise, kumulativ Informationen aus den vorhergehenden Erfassungszyklen und/oder Informationen auch dann aus zumindest einem vorhergehend bestimmten zukünftigen erwarteten Erfassungspunkt und einem Vergleich von zumindest weiteren Erfassungspunkten eines Erfassungszyklus innerhalb einer jeweiligen Beurteilungszone um einen derartigen erwarteten Erfassungspunkt berücksichtigt werden, fließen somit natürlich mehrere und die Aussagewahrscheinlichkeit über ein tatsächlich dann als dynamisch zu beurteilendes Objekt wesentliche Informationen umfänglicher mit ein. Gerade ein Wert größer oder gleich 5 ist in dem Zusammenhang vorteilhaft, denn Informationen und somit auch Messpunkte beziehungsweise Erfassungspunkte in Form von komplexen Objekten, wie beispielsweise einem Menschen oder einem Tier, können dann mit sehr hoher Wahrscheinlichkeit als tatsächlich statisch oder tatsächlich dynamisch eingeschätzt werden. Vorzugsweise beträgt der Wert kleiner oder gleich 10. Dies ist dahingehend eine weitere obere Grenze für diesen Wert, denn dann ist einerseits die Aussagegenauigkeit ausreichend hoch, andererseits wird der Zeit- und Rechenaufwand nicht zu groß. Das Zeitfenster zwischen dem ersten Erfassungszyklus und dem dann insbesondere vorzugsweise zehnten Erfassungszyklus ist dann noch so klein, dass ausreichend schnell eine mit ausreichend hoher Wahrscheinlichkeit behaftete Aussage über ein detektiertes Objekt erfolgen kann, ob es dynamisch oder statisch ist. Gerade für ein Fahrerassistenzsystem ist diese Information dann im Rahmen dieser genannten Werte und somit dieses Intervalls ausreichend, um entsprechende Informationen einem Nutzer des Kraftfahrzeugs bereitstellen zu können und/oder selbst noch ausreichend zeitnah auf eine entsprechende Situation reagieren zu können.

In einer weiteren vorteilhaften Ausführung wird ein Erfassungspunkt eines Erfassungszyklus in zumindest einem nachfolgenden Erfassungszyklus für die Beurteilung der Dynamik von zumindest zwei verschiedenen Objekten berücksichtigt. Auch dadurch wird über das Beurteilungsmodell die Beurteilung von dem Umgebungsbereich des Kraftfahrzeugs verbessert. Denn es kann dann auch präziser und quasi detailgenauer beurteilt werden, welche Aussagen die erhaltenen Erfassungspunkte liefern. Auch dann, wenn gegebenenfalls sehr nahe beieinander liegende, jedoch verschiedene beziehungsweise separate dynamische Objekte im Umgebungsbereich vorhanden sind, kann dann mit dieser Vorgehensweise auch hier bereits mit einer Wahrscheinlichkeit auf diese Situation geschlossen werden. Auch diese vorteilhafte Ausführung kann dann weiter präzisiert werden, wenn, wie auch bereits oben bei vorteilhaften Ausführungen dargelegt, bei weiteren Erfassungszyklen auf diesen Aspekt Augenmerk gelegt wird, ob die vermeintlich als zwei unterschiedliche Objekte klassifizierten Objekte tatsächlich zwei unterschiedliche Objekte, insbesondere zwei unterschiedliche dynamische Objekte, sind.

Vorzugsweise wird ein mit der Ultraschall-Detektionseinrichtung erfasstes und als dynamisches Objekt bewertetes Objekt in eine Umgebungskarte, die den Umgebungsbereich darstellt, eingetragen. Dadurch wird eine Situation geschaffen, bei welcher die Umgebung des Kraftfahrzeugs praktisch bezüglich vorhandener Objekte bekannt ist und auch deren Position und/oder Bewegung zum Kraftfahrzeug analysiert ist. Eine derartige Umgebungskarte kann dann lediglich zur internen weiteren Verarbeitung im Fahrerassistenzsystem bereitgestellt werden, um dann entsprechende Handlungen des Fahrerassistenzsystems vornehmen zu können.

Es kann jedoch auch vorgesehen sein, dass zusätzlich oder anstatt dazu eine derartige Umgebungskarte beziehungsweise Umfeldkarte an einer Anzeigeeinheit des Kraftfahrzeugs angezeigt wird, sodass ein Nutzer auch diese Objekte in der Umgebung auf dieser digitalen Karte sieht.

Es kann vorgesehen sein, dass die Umgebungskarte zweigeteilt ist. Dies bedeutet, dass auch vorgesehen sein kann, dass erkannte statische Objekte in eine erste Umgebungsteilkarte eingetragen werden und als dynamisch erkannte Objekte in eine zweite Umgebungsteilkarte eingetragen werden. Die beiden Umgebungsteilkarten können in dem Zusammenhang als separate Karten weiterverarbeitet oder bereitgestellt werden. Sie können jedoch auch entsprechend fusioniert werden. Durch eine derartige Aufteilung einer Umgebungskarte kann einerseits bedarfsgerechter die Weiterverarbeitung erfolgen, sodass gegebenenfalls dann, wenn nur die statischen Objekte von Interesse sind, ein Weiterverarbeitungsaufwand reduziert ist, wenn dann nur die Umgebungsteilkarte mit den statischen Objekten herangezogen wird. Entsprechendes gilt natürlich dann auch, wenn lediglich die dynamischen Objekte von weiterem Interesse sind.

In besonders vorteilhafter Weise wird bei einem Beurteilen einer Parklücke zum Einparken des Kraftfahrzeugs die Beurteilung eines als dynamisches Objekt erkannten Objekts berücksichtigt und die Parklücke als geeignet erkannt, wenn das dynamische Objekt in der Parklücke erfasst wird. Wie bereits oben dargelegt, wird dies vorteilhaft dadurch weiter spezifiziert, indem auch eine gewisse Bewegungsrichtung und/oder Bewegungsgeschwindigkeit dieses detektierten dynamischen Objekts erfasst und/oder vorhergesagt wird und auf Basis dieser Informationen eine Zeitdauer bestimmt wird, innerhalb derer das dynamische Objekt den Bereich der Parklücke verlassen hat.

Vorzugsweise wird die Ultraschall-Detektionseinrichtung mit zumindest zwei Ultraschallsensoren ausgebildet, und bei einem Erfassungszyklus werden ein einmaliges Aussenden eines Ultraschallsignals eines ersten Ultraschallsensors und das Empfangen des von dem zumindest vermeintlichen Objekt reflektierten Echosignals durch den zweiten Ultraschallsensor durchgeführt. Zusätzlich werden in einem derartigen Erfassungszyklus das Aussenden eines Ultraschallsignals des zweiten Ultraschallsensors und das Empfangen des von einem vermeintlichen Objekt reflektierten Echosignals durch den ersten Ultraschallsensor durchgeführt. Ein Erfassungszyklus umfasst somit vorteilhafterweise immer, dass alle Ultraschallsensoren dieser Ultraschall-Detektionseinrichtung zumindest einmal ein Ultraschallsignal ausgesendet haben und dann in diesem Aussendemodus eines Ultraschallsensors zumindest einer der anderen Ultraschallsensoren dann ein Echosignal empfängt. Ein derartiger Messzyklus beziehungsweise Erfassungszyklus erhöht bereits grundsätzlich die Genauigkeit von erhaltenen Informationen und indem nicht nur von einem Ultraschallsensor ein Sendesignal und ein Echosignal empfangen wird und einem Erfassungszyklus zugrundegelegt wird, kann durch den oben genannten vorteilhaften Erfassungszyklus auch eine umfänglichere Datenbasis bereitgestellt werden, die dann auch wiederum zu einer schnelleren und präziseren Beurteilung eines Objekts als dynamisches Objekt im Rahmen des Beurteilungsmodells beiträgt.

Vorzugsweise führt das Beurteilungsmodell ein Objektmanagement durch, wobei dabei in den Erfassungszyklen als dynamisch klassifizierte Erfassungspunkte als dann dynamisches Objekt zugeordnet werden und dadurch neue dynamische Objekte initialisiert werden und/oder als dynamische Objekte verworfene Objekte gelöscht werden. Dies ist dahingehend besonders vorteilhaft, dass eine dann auf Basis dieser klassifizierten und erkannten Objekte eine Umgebungskarte beziehungsweise Umfeldkarte äußerst schnell und im Hinblick auf die Anzahl und Position der erkannten Objekte sehr präzise erzeugt werden kann.

Vorzugsweise wird bei der Initialisierung von dynamischen Objekten durch das Bewertungsmodell die Berücksichtigung von nur derartigen dynamischen Erfassungspunkten für die Klassifikation eines Objekts als dynamisches Objekt durchgeführt, die einen vorgegebenen Güteschwellwert übersteigen. Dies ist auch wiederum eine dahingehend vorteilhafte Ausführung, dass bei einer Mehrzahl von in einem Erfassungszyklus erhaltenen Erfassungspunkten die Vorselektion durchgeführt werden kann. Durch eine derartige Beurteilung der erhaltenen Erfassungspunkte anhand eines Güteschwellwerts werden offensichtlich nicht taugliche Erfassungspunkte von vornherein aussortiert und müssen im Weiteren nicht mehr berücksichtigt werden. Dies reduziert dann auch den weiteren Bearbeitungsaufwand, insbesondere beispielsweise im Hinblick auf die Erstellung von Zustandsvektoren, zu bestimmenden erwarteten Erfassungspunkten sowie gegebenenfalls darum gebildeten Beurteilungszonen. Ein derartiger Güteschwellwert kann beispielsweise wiederum von Parametern der Ultraschall-Detektionseinrichtung und/oder Parametern des Kraftfahrzeugs, wie beispielsweise die Geschwindigkeit und/oder die Orientierung zu einem vermeintlich detektierten Objekt, als auch gegebenenfalls objektspezifischen Parametern abhängen. Des Weiteren betrifft die Erfindung ein Fahrerassistenzsystem für ein Kraftfahrzeug mit einer Ultraschall-Detektionseinrichtung und einer Auswerteeinrichtung, wobei das Fahrerassistenzsystem zum Durchführen eines erfindungsgemäßen Verfahrens oder einer vorteilhaften Ausgestaltung davon ausgebildet ist. Erfindungsgemäß ist das Fahrerassistenzsystem ein Parkassistenzsystem.

Des Weiteren wird auch ein Kraftfahrzeug mit einem erfindungsgemäßen Fahrerassistenzsystem offenbart.

Darüber hinaus und nicht Teil der beanspruchten Erfindung wird auch ein Computerprogrammprodukt offenbart zum Ausführen eines erfindungsgemäßen Verfahrens oder einer vorteilhaften Ausgestaltung davon, wenn das Computerprogrammprodukt auf einer programmierbaren Computereinrichtung ausgeführt wird. Die Computereinrichtung ist vorzugsweise im Kraftfahrzeug angeordnet.

Wie bereits eingangs dargestellt, ist ein herkömmlicher Ultraschallsensor nicht in der Lage, die Geschwindigkeit eines Objekts zu messen. Es ist lediglich eine Positionsbestimmung von Objekten mit Hilfe mehrerer benachbarter Ultraschallsensoren möglich. Wird eine Umgebungskarte beziehungsweise eine Umfeldkarte beziehungsweise eine Umgebungsbereichskarte basierend auf diesen Positionsinformationen erstellt, so wird, wie bereits im Stand der Technik geschildert, eine Überlagerung von statischen und dynamischen Objekten durchgeführt, wobei die dynamischen Objekte diesbezüglich nicht erkannt wurden, sondern als eine jeweils Vielzahl von statischen Objekten dargestellt wird. Somit werden fälschlicherweise die Positionen eines dynamischen Objekts zu den jeweiligen Messzeiten als jeweils einzelne statische Objekte in die Umgebungskarte eingetragen. Dies führt zur Überlagerung alter und neuer Objektpositionen, was durch das offenbarte Verfahren verhindert wird. Durch das offenbarte Verfahren wird genau dies nicht mehr vollzogen, sondern die dynamischen Objekte werden als solche erkannt, ihre jeweils aktuelle Position aktuell erfasst und wiedergegeben und insbesondere in vorteilhafter Weise gegebenenfalls die aufgetretenen Bewegungstrajektorien und derartige dynamische Objekte in die Umgebungskarte eingezeichnet. In dem Zusammenhang treten jedoch dann nicht einzelne, statische Objektpunkte in der Umfeldkarte auf, sondern es kann in dem Zusammenhang eine Linie gezeichnet werden und am Ende der Linie dann jeweils die aktuelle dynamische Position des Objekts angezeigt werden.

Durch das offenbarte Verfahren kann somit nun auch eine Objekttrajektorie eines dynamischen Objekts nicht nur für die Vergangenheit nachvollzogen werden, sondern vorteilhafterweise auch eine Vorhersage getroffen werden, wohin und wie schnell sich ein dynamisches Objekt weiterbewegt bzw. weiterbewegen könnte.

Darüber hinaus kann ein Fahrerassistenzsystem durch eine nunmehr gegebene Unterscheidungsmöglichkeit zwischen einem statischen und einem dynamischen Objekt auf Basis der Ultraschallsensorinformationen auch individueller auf diesbezüglich erkannte Objekte reagieren und somit eine bedarfsgerechtere Situationsbeurteilung erfolgen.

Insbesondere wird vorgesehen, dass ein statisches Objekt durch einen Zeitstempel, Genauigkeitsinformationen, Klassifikationsinformationen und Zuverlässigkeitsinformationen sowie seine Position beschrieben werden kann. Zumindest einige dieser Informationen können Bestandteil eines Zustandsvektors sein.

Ein dynamisches Objekt besitzt vorzugsweise die gleichen Attribute wie ein statisches, ersetzt jedoch die Positionsinformation durch einen dem verwendeten Bewegungsmodell entsprechenden Zustandsvektor. Vorzugsweise wird der Zustandsvektor nur mit Angaben eines zugrundegelegten Bewegungsmodells versehen.

Weiterhin bezieht sich vorzugsweise eine Genauigkeitsinformation des dynamischen Objekts auf den gesamten Zustandsvektor.

In einer vorteilhaften Ausführung kann auf Basis des zu Grunde gelegten Bewegungsmodells, bei welchem ein bestimmter Zustandsvektor berücksichtigt werden kann, eine Vorhersage bezüglich der Position eines vermeintlichen dynamischen Objekts und damit eine Prädiktion der Umgebung erfolgen. Dies wird durch das Beurteilungsmodell bestimmt.

In einem Prädiktionsschritt des Beurteilungsmodells wird somit in bevorzugter Weise die aktuelle Position jedes dynamischen Objekts über ein zu Grunde gelegtes Bewegungsmodell des Beurteilungsmodells bestimmt, insbesondere geschätzt.

Durch eine derartige Vorgehensweise werden bei dann erfolgenden Verarbeitungsschritten bessere Interpretationen der vorhandenen Daten und damit eine genaue Einschätzung der Umgebung ermöglicht, sodass auch eine genauere und somit mit höherer Wahrscheinlichkeit ermöglichte Vorhersage über das Vorhandensein eines dynamischen Objekts erreicht wird.

Vorzugsweise werden bei dem Klassifikationsablauf, insbesondere der dynamischen Objekte, auch Informationen einer Eigenbewegung des Kraftfahrzeugs in dessen Umgebung mit der kraftfahrzeugseitigen Ultraschall-Detektionseinrichtung erfasst und berücksichtigt. Dabei wird insbesondere eine Galilei-Transformation der Position und der Geschwindigkeit der statischen und dynamischen Objekte in das Koordinatensystem des Kraftfahrzeugs durchgeführt.

Im Weiteren kann vorzugsweise bei der Klassifikation eine Positionsbestimmung erfolgen. Die Positionsbestimmung wird dabei aus einer Messsequenz beziehungsweise aus einem Erfassungszyklus abgeleitet. Dabei werden die aus der Messsequenz abgeleiteten Entfernungen für eine dann noch vorzugsweise unbestätigte Positions-Hypothese beziehungsweise einen dann unbestätigten Erfassungspunkt im zweidimensionalen Raum berücksichtigt und zur weiteren Verarbeitung gespeichert.

Da gerade bei einer Positionsbestimmung auf Basis von Ultraschallinformationen auch eine relativ hohe Rate von Fehlinformationen beziehungsweise Fehlalarmen auftreten kann, ist es vorteilhaft, wenn ihre unbestätigten Positions-Hypothesen beziehungsweise Erfassungspunkte durch ein Bestätigungsszenario bestätigt werden. Vorzugsweise wird eine derartige Bestätigung über eine räumliche Korrelation durchgeführt.

Vorzugsweise wird eine zeitliche Korrelation zwischen Hypothesen beziehungsweise Erfassungspunkten zur Vorklassifikation dieser Erfassungspunkte in "dynamisch" und "statisch" berücksichtigt. Diese Vorklassifikation ist daher nicht abschließend und endgültig und kann, wie auch bereits oben erläutert, durch eine Hypothesen-Objekt-Assoziation verändert werden. Dies erfolgt dann gemäß den bereits oben vorteilhaft geschilderten Vorgehensweisen beispielsweise im Hinblick auf die Zusammenfassung von initialisierten dynamischen Objekten und/oder Zustandsvektoren und/oder die Bestimmung von zukünftig erwarteten Erfassungspunkten und/oder zusätzlich das Bilden von Beurteilungszonen um insbesondere erwartete Erfassungspunkte.

In vorteilhafter Weise wird eine Güte einer derartigen Assoziation als zusätzliches Konfidenzmaß zur Vorklassifikation dynamischer und statischer Erfassungspunkte und somit dynamischer oder statischer Objekte zugrundegelegt.

Insbesondere tragen dynamische als auch statische Erfassungspunkte nur Informationen bezüglich ihrer Position. Die Verrechnung der als dynamisch klassifizierten Erfassungspunkte zu dynamischen Objekten erfolgt in einer vorteilhaften Ausführung erst in einem Verarbeitungsschritt, der durch das oben bereits genannte Objektmanagement vorgegeben wird. Hier wird dann insbesondere eine Initialisierung dieser dynamischen Objekte durchgeführt.

Bei weiteren vorteilhaften Teilschritten bei der Klassifikation wird die ebenfalls bereits mit vorteilhaften Ausführungen dargestellte Objektprädiktion durchgeführt. Die Position der gespeicherten dynamischen Objekte, die dann vorklassifiziert wurden, wird durch die Prädiktion der letzten bekannten Position und den Zeitstempel der aktuellen Messsequenzen und somit dem aktuellen Erfassungszyklus prädiziert, wodurch sich die erwartete Objektposition ergibt. Diese Prädiktion wird unter Zuhilfenahme eines Bewegungsmodells vorzugsweise durchgeführt. Ein beispielhaftes Bewegungsmodell kann das Near-Constant-Velocity-Modell sein. Insbesondere werden dabei die Unsicherheiten der Objekte entsprechend dem neuen Zeitstempel und einem angenommenen Prozessrauschen aktualisiert.

In einem weiteren vorteilhaften Schritt bei der Klassifikation wird eine Hypothesen-Objekt-Assoziation und somit eine Erfassungspunkt-Objekt-Assoziation durchgeführt. Dies bedeutet, dass dann eine Aussage darüber getroffen wird, ob ein Erfassungspunkt zu einem Objekt, insbesondere einem dynamischen Objekt oder einem statischen Objekt zugehörig ist. In dem Zusammenhang wird bei dem Verfahren, insbesondere auch auf Basis des Beurteilungsmodells, mit Hilfe einer spezifischen Metrik, beispielsweise der Mahalanobis-Metrik, der Abstand aller Erfassungspunkte eines aktuellen Erfassungszyklus zu den Positionen der verifizierten dynamischen Objekte und somit insbesondere auch zu den vorherbestimmten erwarteten Erfassungspunkten durchgeführt. Sind diese Distanzen beziehungsweise Abstände, wie dies auch bereits oben in vorteilhaften Ausführungen erläutert wurde, kleiner als ein angenommener Maximalabstand und somit kleiner als ein Begrenzungsrand einer Beurteilungszone und liegen somit diese Abstände innerhalb der Beurteilungszone, werden die Hypothesen beziehungsweise Erfassungspunkte den jeweiligen Objekten zugeordnet, insbesondere, sofern die Vorklassifikation dieser Hypothesen beziehungsweise Erfassungspunkte mit der des dynamischen Objekts kompatibel sind.

Bei einem entsprechend hohen Bestätigungsstatus, der vorzugsweise als weiteres Überprüfungsszenario und somit als weiterer Überprüfungsschritt vorzugsweise durchgeführt wird, findet dieses dynamische Objekt auch bei nicht kompatibler Vorklassifikation eine Assoziation, und die Vorklassifikation der Hypothese wird geändert. Dies bedeutet, wie dies ebenfalls bereits oben in einem Beispiel dargelegt wurde, dass ein als statisch beurteilter Erfassungspunkt und somit einem gegebenenfalls statischen Objekt zugeordneter Erfassungspunkt überschrieben werden kann und im Weiteren dann als dynamischer Erfassungspunkt und insbesondere dann einem dynamischen Objekt zugehöriger Punkt betrachtet werden kann.

Darüber hinaus können einem Objekt auch mehrere Erfassungspunkte zugeordnet werden, wie dies ebenfalls bereits dargelegt wurde. Durch eine derartige Mehrfachzuordnung wird eine genauere und somit finite Ausdehnung eines Objekts modelliert. Es kann damit auch eine genauere Aussage über die Geometrie und Kontur eines Objekts erfolgen. Auch in dem Zusammenhang ist das Verfahren, insbesondere auch die Durchführung des Beurteilungsmodells, besonders vorteilhaft.

Vorzugsweise wird die Anzahl aller Assoziationen zu einem dynamischen Objekt gespeichert und als Charakteristik zum Bestätigungsstatus des jeweiligen Objekts verwendet. Weiterhin wird in einer vorteilhaften Ausführung der Status des dynamischen Objekts auf "aktualisiert" gesetzt und somit quasi ein Update erzeugt, wenn mindestens eine Assoziation erfolgt ist. Insbesondere alle Hypothesen beziehungsweise Erfassungspunkte, die zu sichtbaren und bestätigten dynamischen Objekten assoziiert wurden, werden als "bestätigt" und "dynamisch" vorklassifiziert und für den Eintrag in eine Umgebungskarte vorgemerkt.

In einem weiteren vorteilhaften Schritt bei dem Klassifikationsverfahren wird die Aktualisierung des Zustandsvektors und der Unsicherheiten des dynamischen Objekts über einen Filter durchgeführt. Zur einfachen rechentechnischen Umsetzung kann beispielsweise ein Alpha-Beta-Tracker, wie beispielsweise ein linearer Kalman-Filter mit festem Kalman-Gain verwendet werden.

Sind beispielsweise einem dynamischen Objekt mehrere Hypothesen beziehungsweise Erfassungspunkte zugeordnet, erfolgt eine derartige Aktualisierung beziehungsweise ein entsprechendes Update mit dem der Inversen der Metrik entsprechenden Distanz zur prädizierten Position gewichteten Mittel aller zugeordneten Hypothesen beziehungsweise Erfassungspunkte. Dies wird durch die nachfolgende Formel vollzogen.

$$x_{av} = \left( \frac{1}{\sum_{i=1}^{N} \frac{1}{d_i}} \right) \left( \sum_{i=1}^{N} \frac{x_i}{d_i} \right)$$

Hierbei wird mit $x_{av}$ dem gewichteten Mittelwert der Position und di der Distanz der i-ten-Hypothese beziehungsweise des i-ten-Erfassungspunkts zu der vom Bewegungsmodell vorhergesagten Position, sowie N der Anzahl der zugeordneten Hypothesen beziehungsweise Erfassungspunkte Genüge getan. Dies entspricht einer wahrscheinlichkeitsgewichteten Filteraktualisierung. Es sind jedoch auch andere Filteraktualisierungen möglich.

In einer besonders vorteilhaften Weise wird dann bei dem Klassifikationsverfahren auch ein Objektmanagement durchgeführt. Dies bedeutet, dass als statisch oder dynamisch vorklassifizierte Objekte praktisch für die Verwaltung und Weiterverarbeitung sowie das Erzeugen und das Löschen der Objekte zuständig ist. Vorzugsweise wird dieses Objektmanagement in wiederum drei Schritten durchgeführt. Ein erster Schritt betrifft dabei vorzugsweise eine Initialisierung neuer dynamischer Objekte. Ein zweiter Schritt betrifft vorzugsweise dann ein Löschen duplizierter dynamischer Objekte. Ein dritter Schritt betrifft in dem Zusammenhang ein Objekt-Lebenszeit-Management.

Für die Initialisierung neuer dynamischer Objekte werden vorzugsweise genau zwei Hypothesen beziehungsweise genau zwei Erfassungspunkte zugrundegelegt. Es hat sich dabei als sehr vorteilhaft erwiesen, nur Erfassungspunkte zu betrachten, deren Vorklassifikation als dynamische Erfassungspunkte einen gewissen Güteschwellwert überschreiten.

Zusätzlich kann vorgesehen sein, dass bei diesen Erfassungspunkten dann auch eine Existenzwahrscheinlichkeit überprüft wird. Mit einer Existenzwahrscheinlichkeit wird dabei diejenige Wahrscheinlichkeit zum Ausdruck gebracht, mit welcher beurteilt wird, ob mit dem Messpunkt beziehungsweise dem Erfassungspunkt überhaupt tatsächlich ein Objekt erfasst wurde oder ob dies nicht eine Fehlmessung ist. Unter Berücksichtigung einer derartigen Existenzwahrscheinlichkeit, die dann wiederum vorzugsweise größer einem Existenzschwellwert ist, kann dann eine zusätzliche Information geliefert werden, die zur Präzision der Initialisierung von neuen dynamischen Objekten vorteilhaft beiträgt.

Vorzugsweise wird bei der Initialisierung neuer dynamischer Objekte auch überprüft, ob eine Distanz zwischen diesen zwei Erfassungspunkten innerhalb eines Intervalls und somit auch vorzugsweise innerhalb einer Beurteilungszone liegt. Des Weiteren wird dann vorzugsweise auch vorgesehen, dass eine Initialgeschwindigkeit des zu initialisierenden Objekts kleiner als ein vom Objektmodell abhängiger Schwellwert ist.

In einer weiteren vorteilhaften Art und Weise wird bei der Initialisierung neuer dynamischer Objekte auch die Anzahl der als statisch klassifizierten Hypothesen beziehungsweise Erfassungspunkte in unmittelbarer Umgebung des zu initialisierenden Objekts begutachtet. Vorzugsweise ist hier vorgesehen, dass die Anzahl der als statisch klassifizierten Erfassungspunkte dann geringer einem Initialisierungsschwellwert ist.

Ebenso kann vorzugsweise bei der Initialisierung neuer dynamischer Objekte auch vorgesehen sein, dass die zur Initialisierung verwendeten Erfassungspunkte einen gewissen Abstand zu einem bereits existierenden detektierten Objekt aufweisen. Somit wird hier dann auch überprüft, ob diese Hypothesen bzw. Erfassungspunkte einen Abstand aufweisen, der größer als ein Nahumgebungsschwellwert, der sich auf ein bereits schon existierendes Objekt bezieht und ausgehend von diesem bereits existierenden Objekt bestimmt wird, ist.

Vorzugsweise ist die unmittelbare Umgebung um ein Objekt dabei durch eine wiederum individuelle Metrik und eine Unsicherheit der Objekte beziehungsweise Erfassungspunkte definiert. Es kann auch hier beispielsweise die Mahalanobis-Distanz in Kombination mit der Kovarianz zugrundegelegt werden.

Bei der Initialisierung werden in vorteilhafter Weise die Informationen der beiden zugrundegelegten Hypothesen beziehungsweise Erfassungspunkte berücksichtigt, um den Zustandsvektor zu erzeugen. Für ein einfaches Bewegungsmodell, beispielsweise das Near-Constant-Velocity-Modell, kann dann die Position der neueren der beiden Hypothesen als Position im Zustandsvektor gespeichert werden.

Die Initialgeschwindigkeit lässt sich dann vorzugsweise über eine Differenz der Positionen dieser Erfassungspunkte geteilt durch die Differenz der Zeitstempel bestimmen.

Vorzugsweise werden weiterhin die Konfidenzinformationen und Ungenauigkeitsinformationen verrechnet und im dynamischen Objekt gespeichert.

Bei dem Durchführen des Objektmanagements wird auch, wie bereits oben erwähnt, vorzugsweise das Löschen duplizierter dynamischer Objekte durchgeführt. Dabei wird insbesondere ein Vergleich zwischen Zustandsvektoren aller dynamischen Objekte durchgeführt. Werden dabei zwei ähnliche Objekte gefunden, so wird das Objekt mit einer niedrigeren Güte, wie sie beim Objekt-Status-Management zugrundegelegt wird, gelöscht. Das Objekt mit höherer Güte erhält dann die Assoziationen des gelöschten Objekts und wird auf den Status "aktualisiert" gesetzt. Dies ist auch insbesondere eine Vorgehensweise, wie sie bereits oben in einem Beispiel erläutert wurde, und bei welcher dann mehrere Zustandsvektoren zu einem Repräsentanz-Zustandsvektor zusammengefasst werden.

Vorzugsweise wird dann auch noch im Rahmen des Objektmanagements das Objekt-Status-Management durchgeführt. Insbesondere wird bei dem Vorgehen betreffend der Objekt-Statuts-Managementanalyse unterschieden, ob ein Objekt in dieser Messsequenz beziehungsweise diesem Erfassungszyklus aktualisiert wurde oder nicht. Jede verpasste Aktualisierung erhöht dabei einen Zähler fehlender Zuweisungen und verringert die Güte des jeweiligen vorklassifizierten dynamischen Objekts. Eine Aktualisierung erhöht andererseits die Güte und die Anzahl der in diesem Schritt erfolgten Assoziationen bis auf einen geeigneten Maximalwert. Der Zähler fehlender Zuweisungen wird zurückgesetzt.

Bezüglich der Objektgüte wird bei diesem Objekt-Statuts-Management diese Objektgüte als ein Maß für die Bestätigung des verfolgten dynamischen Objekts zugrundegelegt. Die Güte ist insbesondere eine Funktion der Anzahl fehlender Zuweisungen, der Anzahl als statisch klassifizierter Hypothesen beziehungsweise Erfassungspunkte in unmittelbarer Umgebung (definiert durch die Metrik sowie die Unsicherheit des Objekts) und der Zeitdifferenz zur letzten Aktualisierung.

Vorzugsweise wird bei dem Objekt-Status-Management auch eine Objektsichtbarkeit berücksichtigt. In dem Zusammenhang besitzt ein Objekt ein Sichtbarkeitsattribut, welches entscheidet, ob das Objekt in eine Umgebungskarte beziehungsweise Umfeldkarte beziehungsweise Umgebungsbereichskarte eingetragen wird. Die Sichtbarkeit ist dabei eine Funktion der Güte des dynamischen Objekts, der Anzahl fehlender Zuweisungen, der Anzahl als statisch klassifizierter Hypothesen in unmittelbarer Umgebung (definiert durch die Metrik sowie die Unsicherheit des Objekts) sowie der Zeitdifferenz zur letzten Aktualisierung.

Bezüglich des Vorgehens des Löschens von Objekten im Rahmen der Objekt-Status-Managementanalyse wird ein Objekt dann gelöscht, wenn der Zustand des Objekts nicht mehr ausreichend sicher eingeschätzt werden kann. Insbesondere basiert die Entscheidung darüber auf der Güte des jeweiligen dynamischen Objekts, seiner mittleren Geschwindigkeit über eine definierte Zeit, seine Position in Bezug auf den Erfassungsbereich des Ultraschallsensors, der Anzahl fehlender Zuweisungen, der Anzahl als statisch klassifizierte Hypothesen in unmittelbarer Umgebung (definiert durch die Metrik sowie die Unsicherheit des Objekts) und der Zeitdifferenz zur letzten Aktualisierung.

Bei der Klassifikation wird dann insbesondere auch die ebenfalls bereits angesprochene Ausgabe von statischen und dynamischen Objekten in einer Umgebungsbereichskarte durchgeführt. Dabei werden insbesondere alle bestätigten Hypothesen beziehungsweise Erfassungspunkte zusammen mit den entsprechenden Klassifikationen sowie der Güte in die Umgebungskarte eingetragen. Weiterhin werden insbesondere dann alle sichtbaren dynamischen Objekte mit allen Informationen in die Umgebungskarte eingetragen und damit weiteren Verarbeitungsschritten zur Verfügung gestellt. Beispielsweise kann dann eine derartige Umgebungskarte auch auf einer Anzeigeeinheit des Kraftfahrzeugs angezeigt werden, sodass sie für einen Beobachter beziehungsweise einen Fahrzeuginsassen sichtbar sind.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der beanspruchten Erfindung zu verlassen.

Ausführungsbeispiele der Erfindung werden nachfolgend anhand schematischer Zeichnungen näher erläutert. Es zeigen:

Fig. 1 eine schematische Draufsicht auf ein Ausführungsbeispiel eines erfindungsgemäßen Kraftfahrzeugs mit einem Ausführungsbeispiel eines erfindungsgemäßen Fahrerassistenzsystems;

Fig. 2 eine Darstellung einer auf einer Anzeigeeinheit angezeigten Umgebungsbereichskarte, wie sie aus dem Stand der Technik bekannt ist;

Fig. 3 eine beispielhafte schematische Darstellung einer auf einer Anzeigeeinheit des Kraftfahrzeugs dargestellten Umgebungsbereichskarte, wie sie durch ein Ausführungsbeispiel des erfindungsgemäßen Verfahrens erzeugt wird;

Fig. 4 eine beispielhafte Darstellung von an einem als Fußgänger ausgebildeten Objekt erzeugbaren Erfassungspunkten mittels einer Ultraschall-Detektionseinrichtung;

Fig. 5 eine Darstellung von Erfassungspunkten an dem Fußgänger gemäß Fig. 4 an unterschiedlichen Körperstellen bei Fortbewegung des Fußgängers;

Fig. 6 eine beispielhafte Darstellung eines Ablaufs eines Ausführungsbeispiels eines erfindungsgemäßen Verfahrens; und

Fig. 7 eine schematische Darstellung von einem Teilschritt eines Ausführungsbeispiels eines erfindungsgemäßen Verfahrens.

In den Figuren werden gleiche oder funktionsgleiche Elemente mit den gleichen Bezugszeichen versehen.

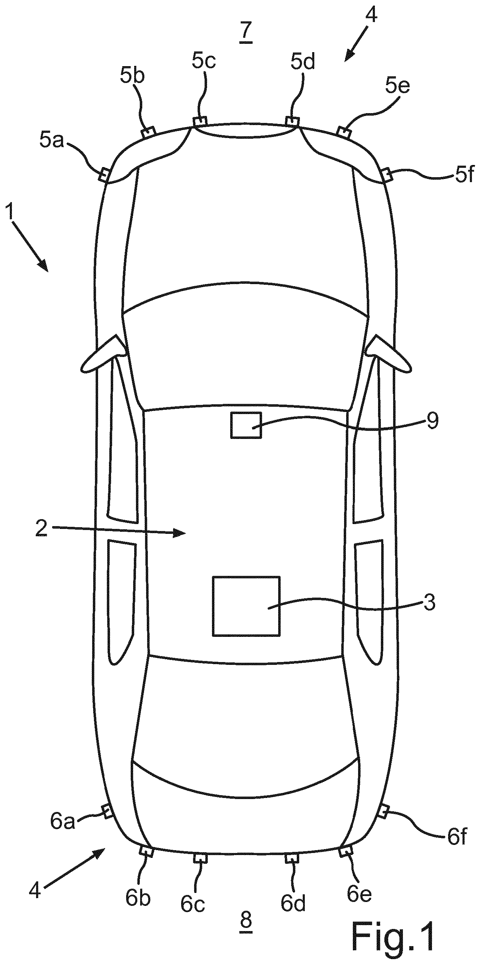

In Fig. 1 ist in einer schematischen Draufsichtdarstellung ein Kraftfahrzeug 1 gezeigt, welches ein Fahrerassistenzsystem 2 aufweist. Das Fahrerassistenzsystem 2 ist erfindungsgemäß ein Parkassistenzsystem.

Das Fahrerassistenzsystem 2 umfasst eine Auswerteeinrichtung 3 und eine Ultraschall-Detektionseinrichtung 4. Die Ultraschall-Detektionseinrichtung 4 umfasst im Ausführungsbeispiel am Kraftfahrzeug 1 frontseitig angeordnete Ultraschallsensoren. Hier sind im Ausführungsbeispiel sechs Ultraschallsensoren 5a, 5b, 5c, 5d, 5e und 5f vorhanden. Darüber hinaus sind im Ausführungsbeispiel auch in einem Heckbereich des Kraftfahrzeugs 1 weitere Ultraschallsensoren 6a, 6b, 6c, 6d, 6e und 6f verbaut. Mit den frontseitigen Ultraschallsensoren 5a bis 5f kann ein frontseitiger und seitlicher Umgebungsbereich 7 erfasst werden. Demgegenüber kann mit den heckseitigen Ultraschallsensoren 6a bis 6f ein heckseitiger und seitlicher Umgebungsbereich 8 des Kraftfahrzeugs 1 erfasst werden. In dem Zusammenhang sind die Ultraschallsensoren 5a bis 5f und 6a bis 6f vorzugsweise so angeordnet, dass der gesamte, um das Kraftfahrzeug 1 vorhandene Umgebungsbereich, der dann aus den Umgebungsbereichen 7 und 8 zusammengesetzt ist, erfasst wird.

Das Kraftfahrzeug 1 umfasst darüber hinaus eine Anzeigeeinheit 9, auf der bildhafte Darstellungen erfolgen können. Auf dieser Anzeigeeinheit 9 kann dann insbesondere eine Umgebungsbereichskarte beziehungsweise eine Umfeldkarte angezeigt werden. Dabei wird dann das Kraftfahrzeug 1 beispielsweise auch in dieser Draufsichtdarstellung gezeigt und der Umgebungsbereich dargestellt, sodass auch in dem Umgebungsbereich 7 und/oder 8 detektierte Objekte angezeigt und für einen Fahrzeuginsassen erkenntlich sind. Dies kann beispielsweise bei einem Einparkvorgang oder einem Ausparkvorgang vorteilhaft sein.

Mit dem Fahrerassistenzsystem 2 ist es ermöglicht, dass im Umgebungsbereich 7 und/oder Umgebungsbereich 8 vorhandene Objekte detektiert werden und auch auf Basis der von Ultraschallsensoren 5a bis 5f und/oder 6a bis 6f erhaltenen Informationen Aussagen über den Zustand von derartigen Objekten gegeben werden können und somit unterschieden werden kann, ob Objekte statische oder dynamische Objekte sind.

Insbesondere ist vorgesehen, dass in der Auswerteeinrichtung 3, die zusätzlich auch eine Steuereinheit sein kann, wobei auch eine Steuereinheit separat zur Auswerteeinrichtung 3 vorgesehen sein kann, die Informationen zumindest einiger Ultraschallsensoren 5a bis 5f sowie 6a bis 6f verarbeitet werden. Sie werden dabei einem in der Auswerteeinheit 3 abgelegten Beurteilungsmodell zugeführt. Mit dem Beurteilungsmodell wird abhängig von diesen Informationen der Ultraschallsensoren 5a bis 5f sowie 6a bis 6f Beurteilungen erstellt, inwieweit im Umgebungsbereich 7 und/oder 8 detektierte Objekte statische Objekte oder dynamische Objekte sind. Mit diesem Beurteilungsmodell müssen zugrundegelegte Informationen somit grundsätzlich dahingehend ausgewertet werden, welche Art von Objekten in einem Umgebungsbereich 7 oder 8 vorhanden sind.

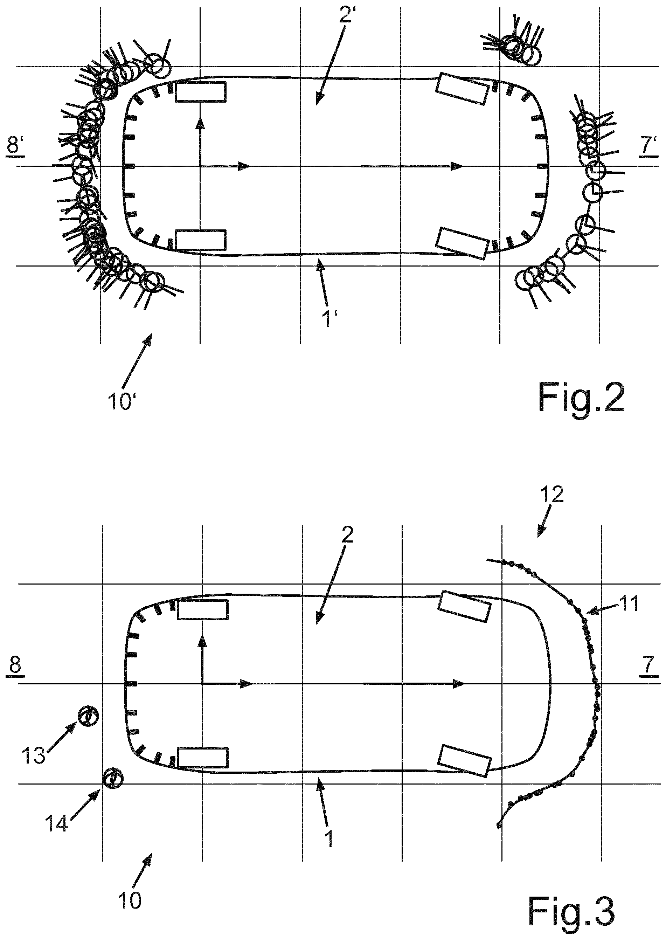

In Fig. 2 ist in einer vereinfachten Darstellung einer aus dem Stand der Technik bekannten Umgebungsbereichskarte 10 gezeigt. In dem Zusammenhang ist ein Kraftfahrzeug 1' gezeigt, welches lediglich ein Fahrerassistenzsystem 2' aufweist, wie es aus dem Stand der Technik bekannt ist.

Bei dieser Ausgestaltung können die Ultraschallsensoren des Kraftfahrzeugs 1' in einem Umgebungsbereich 7' und/oder in einem Umgebungsbereich 8' Objekte detektieren, es kann jedoch nicht zwischen einem statischen und einem dynamischen Objekt unterschieden werden. Dies führt, wie dies in Fig. 2 gezeigt ist, dazu, dass in der Umgebungsbereichskarte 10 die eingezeichneten Messpunkte beziehungsweise Erfassungspunkte dargestellt werden, die erfasst wurden. Dies bedeutet, dass quasi jeder Erfassungspunkt einen statischen Erfassungspunkt darstellt, der somit einem statischen Objekt zugewiesen wird. Dies bedeutet somit auch, dass jegliches Objekt, welches im Umgebungsbereich 7' oder 8' detektiert wird, automatisch als statisches Objekt nur angesehen werden kann. Wie dazu in Fig. 2 zu erkennen ist, führt dies auch dazu, dass eine Vielzahl von Erfassungspunkten überlagert dargestellt werden und auch in der Umgebungsbereichskarte 10 angezeigt werden und verbleiben, auch wenn bereits andere Objekte detektiert wurden. Insbesondere führt die Ausgestaltung aus dem Stand der Technik gemäß Fig. 2 auch dazu, dass tatsächliche dynamische Objekte auch als statische Objekte erkannt werden und ein Weiterbewegen eines derartigen dynamischen Objekts nicht erkannt wird. Es werden in dem Zusammenhang nämlich dann alle in der Vergangenheit liegenden Erfassungspunkte eines derartigen dynamischen Objekts als statische Erfassungspunkte zugrundegelegt und bleiben in der Umgebungsbereichskarte 10 enthalten oder werden erst nach einer bestimmten Zeitdauer wieder gelöscht. Es entsteht daher eine Umgebungsbereichskarte 10, die sogar irreführend ist, denn ein dynamisches Objekt, welches sich längst weiterbewegt hat, wird quasi mit einem Verlaufsschweif angezeigt und dem Nutzer wird daher fälschlicherweise auf der Umgebungsbereichskarte 10 angezeigt, dass an den ursprünglichen Stellen auch noch Objekte wären, obwohl sich dieses dynamische Objekt schon weiterbewegt hat. Es werden daher auch Erfassungspunkte in eine die Darstellung von statischen Objekten vorgesehene Umgebungsbereichskarte aufgenommen, die eigentlich einem dynamischen Objekt zugehörig sind.

Demgegenüber ist in Fig. 3 eine Umgebungsbereichskarte 10 gezeigt, wie sie auf Basis der Erfindung erstellt wird. Hier ist zu erkennen, dass dynamische Objekte erkannt werden und dann als aktuelle Erfassungspunkte nur immer diejenigen dargestellt werden, die gerade den aktuellen Ort des dynamischen Objekts relativ zum Kraftfahrzeug 1 zeigen. Es wird somit quasi auch eine Echtzeit-Umgebungsbereichskarte 10 erstellt, bei der neben dem Erfassen der Objekte auch das Unterscheiden zwischen statischen und dynamischen Objekten tatsächlich erfolgen kann. Wie in der Darstellung in Fig. 3 auch zu erkennen ist, erscheint die Umgebungsbereichskarte 10 dann auch wesentlich übersichtlicher und korrekter, da in der Vergangenheit liegende Erfassungspunkte eines dynamischen Objekts in der Umgebungsbereichskarte 10 nicht mehr vorhanden sind und bei einem Fortbewegen des dynamischen Objekts auch unverzüglich nicht mehr dargestellt werden.

In einer vorteilhaften Ausführung kann vorgesehen sein, dass ein in der Vergangenheit liegender Bewegungsweg eines als dynamisches Objekt klassifizierten beziehungsweise erkannten Objekts durch eine Bewegungslinie auch kenntlich gemacht wird, wie dies beispielsweise durch die Bewegungslinie 11 in Fig. 3 gezeigt ist. In dem Zusammenhang wird somit der Bewegungsweg eines sich beispielsweise um das Kraftfahrzeug 1 herum bewegenden Fußgängers als Objekt 12 noch angezeigt.

In einer weiteren vorteilhaften Ausführung kann auch vorgesehen sein, dass bei einem Erkennen eines dynamischen Objekts ausgehend von der tatsächlichen Position und unter Berücksichtigung des in der Vergangenheit zurückgelegten Bewegungswegs ein zu erwartender weiterer Bewegungsweg dieses dynamischen Objekts bestimmt wird und ebenfalls in die Umgebungsbereichskarte 10 eingezeichnet werden kann.

Es kann auch vorgesehen sein, dass in der gezeigten Ausführung zusätzlich auch noch statische Objekte 13 und 14 im Umgebungsbereich 8 erfasst sind. Diese können dann in der Umgebungsbereichskarte 10 aufgenommen sein. Es kann auch vorgesehen sein, dass zwei separate Umgebungsbereichskarten erstellt werden, wobei eine Umgebungsbereichskarte nur die statischen Objekte und die anderen Umgebungsbereichskarte nur die dynamischen Objekte aufnimmt, insbesondere dann auch auf einer Anzeigeeinheit darstellt.

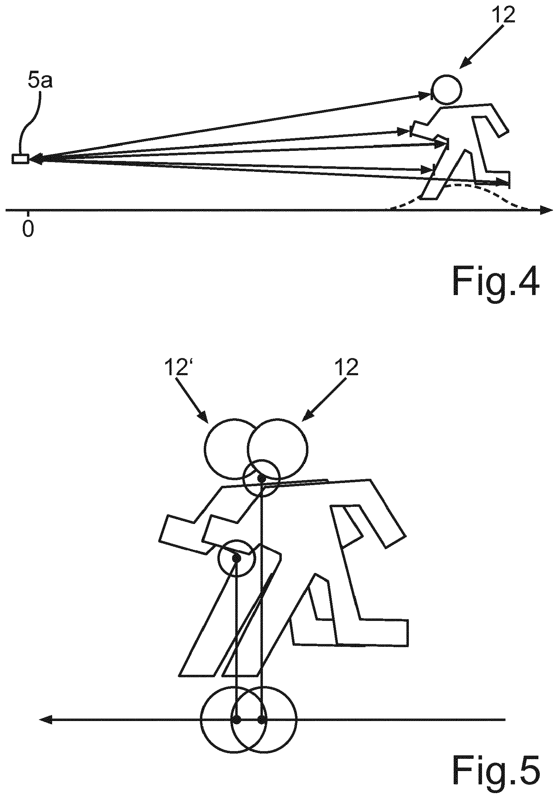

Wie in Fig. 4 dargestellt, ist im Umgebungsbereich 7 ein sich bewegender Fußgänger als Objekt 12 vorhanden, der beispielsweise zumindest auch von dem Ultraschallsensor 5a detektiert wird. Bei der Detektion von Objekten mit Ultraschallsensoren treten diesbezüglich auch noch erschwerende Effekte auf, die eine Klassifikation von erzeugten Messpunkten beziehungsweise Erfassungspunkten erschweren. Ein derartiger Fußgänger ist ein für Ultraschallsensoren sehr unregelmäßiges Objekt, dessen Reflexionspunkte über seine gesamte Ausdehnung verteilt sind, wie dies auch in Fig. 4 dargestellt ist. Dadurch kann auch eine hohe Wahrscheinlichkeit bestehen, dass die von einem stehenden Fußgänger stammenden Erfassungspunkte sich nicht gegenseitig bestätigen. Dies würde dann auch zu einer Klassifikation als dynamisches Objekt führen.

Darüber hinaus ist die Distanz, die ein Fußgänger in der Zeit zwischen zwei aufeinanderfolgenden Messsequenzen beziehungsweise Erfassungszyklen zurücklegt, kleiner als seine Ausdehnung. Dadurch kann auch die Möglichkeit auftreten, dass die von einem sich bewegenden Fußgänger stammenden und in zwei aufeinanderfolgenden Messsequenzen beziehungsweise Erfassungszyklen erzeugten Erfassungspunkte sehr nahe beieinander liegen und damit als statisches Objekt klassifiziert werden. Beispielsweise ist dies in Fig. 5 auch dargestellt, in dem sich ein Fußgänger als Objekt 12 weiterbewegt und dann relativ dazu an einer weiteren Position ankommt, wo er dann als Fußgänger als Objekt 12' erscheint. Wie dazu in Fig. 5 beispielhaft dargestellt, kann eine Situation auftreten, bei welcher beim Fußgänger als Objekt 12 der Erfassungspunkt am Hals auftritt, wohingegen bei einer Situation beim Fußgänger 12', bei welcher er sich weiterbewegt hat, ein Erfassungspunkt bei einem Bein oder der Hüfte auftritt. Wie dazu in Fig. 5 dargestellt, sind diese beiden Erfassungspunkte relativ nahe beieinander und mit relativ gleichem Abstand zum Ultraschallsensor 5a erfasst und es könnte auch hier dann ein statisches Objekt angenommen werden.

Um auch diese Unwägbarkeiten abzuschätzen, wird auch hier eine entsprechende Beurteilung in dem Beurteilungsmodell vorgenommen.

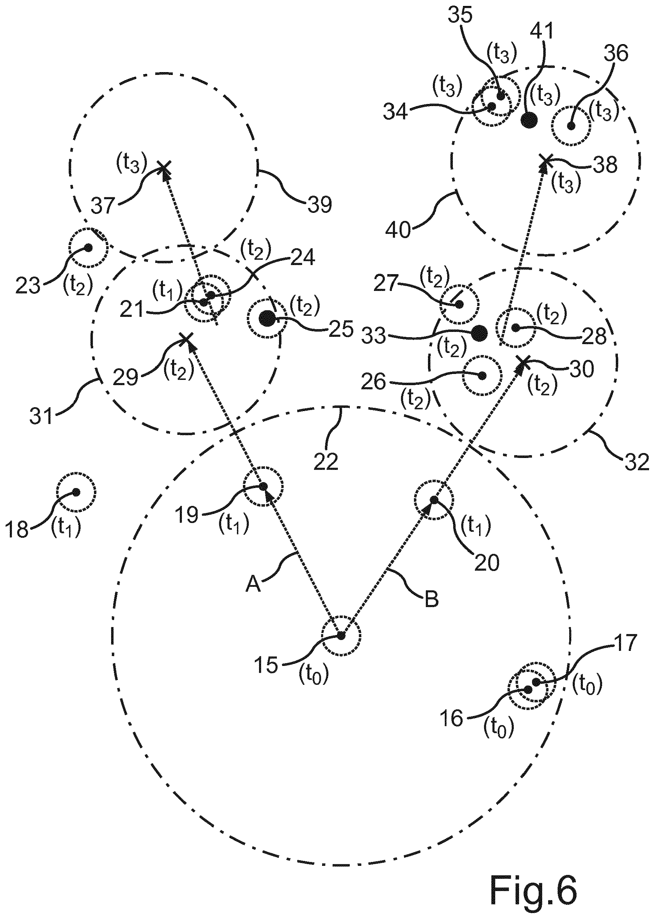

Dazu ist in Fig. 6 in einer beispielhaften Darstellung eine Skizze gezeigt, die den Ablauf des Beurteilungsszenarios beispielhaft näher erläutert.

Wird zu einem Zeitpunkt t0, zu dem das Beurteilungsszenario beginnt, und zu dem ein erster Erfassungszyklus erfolgt, ein Objekt im Umgebungsbereich 7 oder 8 des Kraftfahrzeugs 1 detektiert, so kann dies durch den Erhalt zumindest eines Erfassungspunkts 15 erkannt werden. Ein Erfassungspunkt stellt dabei insbesondere eine Hypothese dar. Eine Hypothese ist der Punkt definiert durch den Schnittpunkt zweier Entfernungsmessungen von Ultraschallsensoren, also insbesondere ein Triangulationspunkt.

Allgemein gesprochen wird in bevorzugten Ausführungsbeispielen vorgesehen, dass zwei Erfassungspunkte von zwei aufeinander folgenden Messzyklen bzw. Erfassungszyklen als statisch klassifiziert werden, wenn sie in einem Abstand zueinander liegen, der kleiner einem Abstandsschwellwert ist. Insbesondere kann dieser Abstandschwellwert kleiner oder gleich 15 cm, insbesondere 10 cm sein. Vorzugsweise wird diese Klassifikation dahingehend spezifiziert, dass zusätzlich zu diesem Abstandskriterium auch kein durch das Beurteilungsmodell für die modellinterne weitere Beurteilung generiertes dynamisches Objekt in einer Nahumgebung zu den Erfassungspunkten sich befindet. Die Nahumgebung kann wiederum mit einem weiteren Abstandsschwellwert definiert werden, wobei der weitere Abstandschwellwert kleiner oder gleich 20 cm sein kann. Zusätzlich kann vorgesehen sein, dass ein vermeintliches dynamisches Objekt sich auch mit einer spezifischen Güte als ein derartiges Klassifizieren lassen muss, um dann ausgehend davon die Erfassungspunkte als in dem Nahbereich bzw. der Nahumgebung dieses dynamischen Objekts liegend beurteilen zu können. Liegen die Erfassungspunkte dann in einer derartigen Nahumgebung, werden sie als, insbesonder möglicherweise, dynamische Erfassungspunkte klassifiziert und dem generierten dynamischen Objekt zugeordnet, so dass abhängig davon das im Umgebungsbereich ... real vorhandene Objekt als dynamisches Objekt erkannt werden kann.

Auch allgemein gesprochen wird in bevorzugten Ausführungsbeispielen vorgesehen, dass zwei Erfassungspunkte eines Messzyklus bzw. eines Erfassungszyklus als, insbesondere möglicherweise, dynamisch klassifiziert werden, wenn sie in einem Abstand zueinander liegen, der kleiner einem weiteren Abstandsschwellwert ist. Insbesondere kann dieser weitere Abstandschwellwert kleiner oder gleich 15 cm, insbesondere 10 cm sein.

Auch allgemein gesprochen wird in bevorzugten Ausführungsbeispielen vorgesehen, dass ein Erfassungspunkt bzw. eine Hypothese, bei welcher in einem Abstand kleiner oder gleich einem weiteren Abstandsschwellwert kein weiterer Erfassungspunkt liegt, als, insbesondere möglicherweise, dynamisch klassifiziert wird. Insbesondere kann dieser weitere Abstandschwellwert kleiner oder gleich 15 cm, insbesondere 10 cm sein.

Für die dargelegten Beurteilungen der Erfassungspunkte sind insbesondere Beurteilungszonen um Erfassungspunkte erzeugt, die mit einem Radius entsprechend den Abstandsschwellwerten gebildet sind.

Gemäß Fig. 6 wird zu einem Zeitpunkt t0 ein erster Messzyklus beziehungsweise Erfassungszyklus durchgeführt und ein Beurteilungsszenario begonnen. Ein Erfassungszyklus betrifft dabei in dem Zusammenhang im Ausführungsbeispiel, dass jeweils jeder Ultraschallsensor 5a bis 5f einmal ein Ultraschallsignal aussendet, welches abhängig von detektierten Objekten und Reflexionseigenschaften dann als Echosignal von einem oder mehreren der anderen Ultraschallsensoren 5b bis 5f empfangen wird. Entsprechend erfolgt dieses Szenario dann jeweils zeitversetzt auch dahingehend, dass die weiteren Ultraschallsensoren 5b bis 5f jeweils ein Ultraschallsignal aussenden und, falls vorhanden, dann von zumindest einem der anderen Ultraschallsensoren ein Echosignal empfangen wird.

Das Messsystem bzw. die Ultraschall-Detektionseinrichtung 4 findet in diesem ersten Messzyklus die Hypothese bzw. Erfassungspunkte 15, 16 und 17. Obwohl die Erfassungspunkte 16 und 17einen Abstand zueinander aufweisen, der kleiner einem Abstandsschwellwert, der beispielsweise 10 cm betragen kann, ist, werden sie als möglicherweise dynamisch klassifiziert, da sie aus dem gleichen Messzyklus stammen. Wäre beispielsweise der Erfassungspunkt 17 schon in einem vorhergehenden Messzyklus gemessen worden, so wären die Erfassungspunkte 16 und 17 als statisch klassifiziert worden, und so einer Umgebungsbereichskarte 10 übermittelt worden.

Der Einfachheit halber und für die weitere Erläuterung von Beurteilungen ausreichend soll im Folgenden nur der Erfassungspunkt 15 weiter betrachten werden, der ebenfalls als möglicherweise dynamisch klassifiziert ist.

Da das Messsystem im aktuellen Zustand keine dynamischen Objekte erfasst hat, entfallen die im weiteren noch erläuterten Beurteilungsschritte einer Assoziation, eines Updates sowie eines Track- / Objekt-Managements.

Zu einem nachfolgenden Zeitpunkt t1 wird dann ein weiterer Messzyklus bzw. Erfassungszyklus durchgeführt. Das Messsystem erkennt dabei beispielsweise die Hypothesen bzw. Erfassungspunkte 18, 19, 20 und 21. Diese werde aufgrund der oben genannten Abstandsbeurteilungen bzw. Abstandskriterien alle als möglicherweise dynamisch klassifiziert.

Da das Messsystem zum Zeitpunkt t1 noch keine dynamischen Objekte erfasst bzw. zuerkannt hat, wird auch im Zeitintervall zwischen dem Zeitpunkt t1 und einem nachfolgenden weiteren Zeitpunkt t2, zu dem dann ein weiterer Messzyklus durchgeführt werden kann, noch keine Assoziation von Erfassungspunkten und kein Update bzw. keine Aktualisierung von Erfassungspunkten durchgeführt.

Die Hypothesen bzw. Erfassungspunkte 15, 18, 19, 20 werden nun aber verwendet, um neue dynamische Objekte zu generieren. Dazu werden im Ausführungsbeispiel die folgenden Bedingungen insbesondere aller Paarungen dieser Hypothesen bzw. Erfassungspunkte geprüft:

- Abstand der Erfassungspunkte zueinander < vorgegebenem maximalem Abstandschwellwert
- Abstand der Erfassungspunkte zueinander > vorgegebenem minimalem Abstandsschwellwert
- resultierende Geschwindigkeit bzw. Fortbewegungsgeschwindigkeit der Erfassungspunkte zueinander < vorgegebener maximaler Geschwindigkeits-Schwellwert

Der maximale Abstandsschwellwert ist hierbei ein Radius einer Beurteilungszone 22, die um den Erfassungspunkt 15 gebildet ist. Im Ausführungsbeispiel ist die Beurteilungszone 22 symmetrisch, insbesondere ein Kreis. Dies ist insbesondere deshalb der Fall, da von der Hypothese bzw. dem Erfassungspunkt 15 noch keine Informationen bezüglich einer möglichen Bewegungsrichtung erhalten werden.

Der Übersichtlichkeit dienend ist in Fig. 6 keine weitere Beurteilungszone eingezeichnet, die insbesondere mit einem Radius mit dem minimalen Abstandschwellwert gebildet wird. Diese weitere Beurteilungszone wäre daher kleiner als die Beurteilungszone 22. Ebenfalls wurde in Fig. 6 die maximale resultierende Geschwindigkeit der Übersichtlichkeit dienend nicht eingezeichnet.

Sind alle diese Bedingungen erfüllt, so wird ein neues dynamisches Objekt mit folgendem zugeordneten Zustandsvektor $x_{state}$ gebildet

$$\vec{x}_{state} = \begin{pmatrix} x_1 \\ \dfrac{x_1 - x_2}{t_1 - t_2} \\ y_1 \\ \dfrac{y_1 - y_2}{t_1 - t_2} \end{pmatrix}$$

Der Index 1 bedeutet hierbei, dass sich die Größe auf die Hypothese bzw. den Erfassungspunkt mit dem jüngeren Zeitstempel bzw. dem früheren Zeitpunkt der Erfassung bezieht. Entsprechend bezeichnet der Index 2 die Hypothese bzw. den Erfassungspunkt mit dem älteren Zeitstempel. Insbesondere werden noch vorzugsweise vorhandene andere Parameter auf geeignete Initialwerte gesetzt. Insbesondere ist es dabei sinnvoll das dynamische Objekt auf unsichtbar zu setzen, und die Sichtbarkeit nach weiteren Bestätigungen, sprich Zuordnungen von Hypothesen, zu ändern.

In dem Beispiel gemäß Fig. 6 erfüllen die Erfassungspunkte 19 und 20 die Bedingungen. Es kann dann das Objekt, das aus den Erfassungspunkten 15 und 19 generiert wurde, als dynamisches Objekt A, und das Objekt, das aus den Erfassungspunkten 15 und 20 generiert wurde, als dynamisches Objekt B durch das Beurteilungsmodell initialisiert werden.

Die Hypothese bzw. Erfassungspunkte 18 und 21 liegen außerhalb des Suchbereiches bzw. außerhalb der Beurteilungszone 22. Denn der Abstand des Erfassungspunkts 18 und des Erfassungspunkts 18 zu dem Erfassungspunkt 15 ist größer als der maximale Abstandsschwellwert. Aus dem Grund werden durch das Beurteilungsmodell die Erfassungspunkte 18 und 21 nicht verwendet bzw. nicht berücksichtigt, um neue dynamische Objekte zu initialisieren. Vorzugsweise werden die Erfassungspunkte 18 und 21 aber für eine mögliche Initialisierung in einem nächsten Zeitschritt bzw. zu einem späteren Zeitpunkt gespeichert.

Im Ausführungsbeispiel wird zur weiteren Beurteilung und somit zu einer präziseren Aussagemöglichkeit, ob ein Objekt dynamisch ist, zu einem weiteren Zeitpunkt t2 ein weiterer Messzyklus bzw. Erfassungszyklus durchgeführt. Das Messsystem erfasst dabei im Ausführungsbeispiel die Hypothesen bzw. Erfassungspunkte 23 bis 28. Da die Hypothese bzw. der Erfassungspunkt 21 schon im vorigen Zeitschritt bzw. zum vorhergehenden Zeitpunkt t1 erfasst wurde, und im gezeigten Ausführungsbeispiel die Hypothese bzw. der Erfassungspunkt 24 weniger als ein Abstandsschwellwert, z.B. weniger als 10cm, von dem Erfassungspunkt 21 entfernt ist, werden beide Erfassungspunkte 21 und 24 als statisch klassifiziert. Alle anderen werden, insbesondere aufgrund der Abstände als möglicherweise dynamisch klassifiziert.

In einem Prädiktionsschritt des Beurteilungsmodells wird in bevorzugter Weise die aktuelle Position jedes dynamischen Objekts über ein zu Grunde gelegtes Bewegungsmodell des Beurteilungsmodells bestimmt, insbesondere geschätzt.

Im Ausführungsbeispiel ergeben sich dabei die erwarteten Positionen und somit erwartete Erfassungspunkte 29 und 30.

In einem Assoziierungsschritt bzw. bei einer Assoziierung des Beurteilungsmodells wird in einer Beurteilungszone 31 um den erwarteten Erfassungspunkt 29 und im Ausführungsbeispiel in einer Beurteilungszone 32 um den erwarteten Erfassungspunkt 30 der dynamischen Objekte nach passenden Hypothesen bzw. tatsächlich gemessenen Erfassungspunkten gesucht. Als Distanzmass für die Beurteilungszonen wird hier z.B. die Mahalanobis-Distanz verwendet. Dies hat den Vorteil, dass die Beurteilungszonen 31 und 32 mit einem dimensionslosen Parameter beschrieben werden können.

Die Hypothesen bzw. Erfassungspunkte 21 und 24 sind als statisch klassifiziert, und werden nicht berücksichtigt, da die Güte des dynamischen Objekts mit erwarteter Position bzw. erwartetem Erfassungspunkt 29 im Ausführungsbeispiel nicht hoch genug ist (es wurde erst im vorigen Zeitschritt initialisiert, und besitzt deshalb eine Initial-Güte.) Wäre die Güte jedoch hoch genug, würde die Klassifikation der Hypothesen bzw. Erfassungspunkte 21 und 24 überschrieben, und die Hypothesen bzw. Erfassungspunkte 21 und 24 für ein Update bzw. eine Aktualisierung der Beurteilung herangezogen.

Die Hypothesen bzw. Erfassungspunkte 25 sowie 26 bis 28 liegen im Erwartungsbereich der dynamischen Objekte A bzw. B mit Erwartungspositionen bzw. erwarteten Erfassungspunkten 29 bzw. 30, und werden im Ausführungsbeispiel dann diesen zugeordnet.

Die Hypothesen bzw. Erfassungspunkte 26 bis 28 werden im Ausführungsbeispiel nach dem im nachfolgenden noch beschriebenen Beurteilungsszenario des Beurteilungsmodells gewichtet, und ergeben dann eine Schwerpunktposition bzw. einen gemittelten Erfassungspunkt 33, der für das folgende Update bzw. die nachfolgende Aktualisierung berücksichtigt wird. Da sich im Ausführungsbeispiel im der Beurteilungszone 31 nur eine als möglicherweise dynamisch klassifizierte Hypothese bzw. ein Erfassungspunkt 25 befindet, ist dieser selbst seine Schwerpunktposition bzw. sein gemittelter Erfassungspunkt.

Darüber hinaus wird im Ausführungsbeispiel bei den für die Aktualisierung der Aussage über ein mögliches dynamisches Objekt verwendeten Hypothesen bzw. Erfassungspunkten die Klassifikation von möglicherweise dynamisch auf (bestätigt) dynamisch geändert, insbesondere wenn das dynamische Objekt als sichtbar angesehen ist. Da dies im Ausführungsbeispiel nicht der Fall ist, bleibt die Klassifikation der Hypothesen bzw. der Erfassungspunkte auf dem Status möglicherweise dynamisch.

Das Update bzw. die Aktualisierung der Klassifikation der Erfassungspunkte und der Zustandsvektoren erfolgt dann insbesondere über einen Filter-Algorithmus (z.B. einem Kalman-Filter mit statischem Filter-Gain, auch Alpha-Beta-Filter genannt). Durch das Update werden die neu erfassten Informationen durch die Messungen in die Schätzung des Zustandsvektors eingerechnet.

Das Track-Management des Beurteilungsmodells prüft anschließend, ob Klassifikationen wie die Sichtbarkeit der Objekt-Schätzungen geändert werden müssen, sowie ob Objekt-Schätzungen gelöscht werden müssen. Da in dem erläuterten Ausführungsbeispiel beide Objekt-Schätzungen ein Update erhalten haben, steigt das Vertrauen des Messsystems in die Schätzungen. Insbesondere werden sie auch nicht gelöscht.

Beispielhaft soll für die weitere Erläuterung des Beurteilungsmodells im Weiteren angenommen werden, dass die Konfidenz der Objekt-Schätzungen hier noch nicht über einen Konfidenz-Schwellwert angestiegen ist, der ein Sichtbarkeits-Attribut auf sichtbar setzt.

Im Ausführungsbeispiel wird daher insbesondere dann zu in einem weiteren Zeitpunkt t3 ein weiterer Messzyklus bzw. ein Erfassungszyklus durchgeführt, der für die Beurteilung, ob ein Objekt dynamisch ist, berücksichtigt wird.

Das Messsystem erfasst dabei zum weiteren Zeitpunkt t3 weitere Hypothesen bzw. Erfassungspunkte 34, 35, 36. Die Hypothesen bzw. Erfassungspunkte 34 und 35 haben einen Abstand von weniger als einem Abstandsschwellwert, der beispielsweise z.B. 10cm beträgt. Da sie aber in dem gleichen Messzyklus gemessen wurden, werden beide als möglicherweise dynamisch klassifiziert, und deshalb berücksichtigt, auch wenn die Güte des dynamischen Objekts B unterhalb eines entsprechenden Güte-Schwellwertes liegt.

In einem Prädiktionsschritt des Beurteilungsmodells wird auch hier die aktuelle Position jedes dynamischen Objekts über das Bewegungsmodell geschätzt. Die erwarteten Positionen bzw. die erwarteten Erfassungspunkte 37 und 38 wurden bestimmt bzw. vorhergesagt.

In einem Assoziationsschritt werden wieder in Beurteilungszonen 39 und 40 um die erwarteten Erfassungspunkte 37 und 38 der dynamischen Objekte A bzw. B nach passenden gemessenen Hypothesen bzw. tatsächlich gemessenen Erfassungspunkten gesucht.

Die Hypothesen bzw. Erfassungspunkte 34 bis 36 sind als möglicherweise dynamisch klassifiziert, und werden daher wieder insbesondere nach der obigen Vorschrift zu einem einzelnen gemittelten Erfassungspunkt 41 bestimmt. Da sich im Ausführungsbeispiel in der Beurteilungszone 39 keine Hypothese befindet, erfolgt kein update für das dynamische Objekt A.

Das Update der Zustandsvektoren erfolgt wieder über den selben Filter wie im vorigen Zeitschritt.

Das Track-Management des Beurteilungsmodells prüft anschließend die Charakteristika der dynamischen Objekte.

In diesem Beispiel gehen wir nun davon ausgegangen, dass das dynamische Objekt B nun über einen Schwellwert für die Sichtbarkeit liegt und somit mit vorgegebener und gewünschter Genauigkeit eine Aussage getroffen wird, dass das Objekt dynamisch ist. Es wird daher an die nächste Verarbeitungsebene, z.B. eine dynamische Umgebungsbereichskarte weitergegeben, die auch an einer Anzeigeinheit 9 angezeigt werden kann. Weiterhin bedeutet dies, dass alle im nächsten Zeitschritt diesem dynamischen Objekt zugeordneten (als möglicherweise dynamisch klassifizierte) Hypothesen eine Änderung der Klassifikation auf (bestätigt) dynamisch erfahren.

Das dynamische Objekt A hat kein update erfahren. Als Konsequenz wir die Güte des dynamischen Objekts A erniedrigt. In diesem Ausführungsbeispiel sei nun die Güte unterhalb des durch das Beurteilungsmodell vorgegebenen Güte-Schwellwertes, bei dem ein Löschen der dynamischen Objekte veranlasst wird. Entsprechend wird nun das dynamische Objekt A gelöscht.

Bezüglich der Beurteilungszonen sei angemerkt, dass sie, wie bereits oben erwähnt, im Allgemeinen einen durch einen maximalen Abstand begrenzten Bereich für eine erwartete (prädizierte) Position angeben. Als Metrik kann beispielsweise die Mahalanobis-Distanz verwendet werden. Da diese Metrik, geometrisch gesehen, auf eine Ellipsengleichung führt, ist die Beurteilungszone eine Ellipse. Wenn die Varianzen in x und y gleich sind, so wird diese zu einem Kreis. Es kann jedoch auch eine andere Metrik verwendet werden, beispielsweise eine Manhattan-Metrik, bei welcher so wird die Beurteilungszone dann eine Raute ist.

Generell seien nochmals allgemeingültig einige Aspekte des Beurteilungsmodells zusammengefasst dargestellt:

- Hypothesen, die keine anderen Hypothesen in einer Entfernung kleiner einem Abstandsschwellwert und somit insbesondere innerhalb einer Beurteilungszone um sich haben werden als möglicherweise dynamisch klassifiziert;
- Hypothesen, die andere Hypothesen in einer Entfernung kleiner einem Abstandsschwellwert und somit insbesondere innerhalb einer Beurteilungszone um sich haben werden als möglicherweise dynamisch klassifiziert, wenn die Hypothesen alle in dem gleichen Messzyklus gemessen wurden. Insbesondere zwei Hypothesen in einem Abstand kleiner dem Abstandsschwellwert bzw. innerhalb der Beurteilungszone sind möglicherweise dynamisch, wenn beide Hypothesen in demselben Messzyklus gemessen wurden;

- Allerdings werden Hypothesen, die andere Hypothesen in einem Abstand kleiner als dem Abstandsschwellwert und somit insbesondere innerhalb der Beurteilungszone um sich haben, als statisch klassifiziert, wenn mindestens eine der Hypothesen aus einem anderen Messzyklus stammt.

Eine Klassifikation des Beurteilungsmodells ist vorzugsweise nicht endgültig, sondern kann überschrieben werden. Deshalb ist die obige Einteilung insbesondere als VorKlassifikation anzusehen. Im Allgemeinen werden bei der Assoziation nur die als möglicherweise dynamische klassifizierten Hypothesen verwendet. Insbesondere bedeutet das, dass die als statisch klassifizierten Hypothesen nicht zugeordnet werden. Aber es gibt die Möglichkeit für ein dynamisches Objekt mit hoher Güte (also ein dynamisches Objekt, über dessen Existenz sich das System sehr sicher ist) die als statisch klassifizierten Hypothesen trotzdem zu verwenden. Dies geschieht, wenn die Güte des dynamischen Objekts einen Güte-Schwellwert übersteigt. In diesem Fall werden die als statisch klassifizierten Hypothesen behandelt als wären sie dynamisch, d.h. sie werden genau so verrechnet. Darüber hinaus wird ihre Klassifikation von statisch auf dynamisch geändert. Im jeweiligen Beispielfall kommt es insbesondere also auch darauf an, ob die Güte des dynamischen Objekts über diesem Güte-Schwellwert liegt oder nicht, um zu bestimmen, ob als statisch klassifizierte Hypothesen ebenfalls verwendet werden.

Darüber hinaus gilt allgemein auch, dass das Messsystem Hypothesen, und zum anderen dynamische Objekte kennt. Hypothesen erhalten bei ihrer Erfassung insbesondere eine von zwei Vorklassifikationen: möglicherweise dynamisch oder statisch. Die Vorklassifikation wird insbesondere verwendet, um über die Zuordnung zu schon existierenden dynamischen Objekten zu entscheiden, sowie über ihre Verwendung für die Initialisierung neuer dynamischer Objekte. Insbesondere nur als möglicherweise dynamisch klassifizierte Objekte werden für die Initialisierung verwendet. Wird eine Hypothese einem sichtbaren dynamischen Objekt zugeordnet, so wird die Klassifikation auf (bestätigt) dynamisch gesetzt. Weiterhin besitzen Hypothesen keine Lebenszeitkriterien. Sie werden in jedem Messzyklus erfasst, und danach eine gewisse Zeit im Speicher gehalten (z.B. einen weiteren Zyklus).

Dynamische Objekte auf der anderen Seite sind immer dynamisch. Sie besitzen allerdings eine Güte sowie ein Sichtbarkeitsattribut. Letzteres entscheidet, ob das dynamische Objekt an die nächste Ebene weitergegeben wird, oder nur intern verwendet wird. Dynamische Objekte werden gelöscht, wenn ihre Güte unter einen gewissen Schwellwert fällt oder sie lange kein Update erhalten haben. Dies wären beispielsweise zwei Lebenszeit-Kriterien. Die Güte ist insbesondere an das Update gekoppelt, so dass ein dynamisches Objekt, das lange kein Update erhalten hat, eine niedrige Güte besitzt. Das Bewegungsmodell der dynamischen Objekte ist unabhängig von der Lebenszeit. Es sagt lediglich voraus, nach welcher Gesetzmäßigkeit sich das dynamische Objekt bewegt (z.B. mit konstanter Geschwindigkeit). Die Schwellwerte zum Löschen (Lebenszeitkriterien) sind davon unabhängig.

Es sei nun nochmals auf den Zeitpunkt t1 in Fig. 6 eingegangen. In diesem weiteren Erfassungszyklus zum Zeitpunkt t1 wird, wie bereits angedeutet, dann ein entsprechendes Messszenario mit den Ultraschallsensoren 5a bis 5f durchgeführt, sodass auch hier jeder dieser Ultraschallsensoren 5a bis 5f einmal sendet und jeweils von den anderen dann gegebenenfalls vorhandene Echosignale empfangen werden. Insbesondere ist ein zeitlicher Abstand zwischen zwei Erfassungszyklen kleiner 100 ms, insbesondere kleiner 60 ms. Insbesondere ist die Zeitdauer eines Erfassungszyklus kleiner 30 ms.

Wie dazu in dem beispielhaften Szenario in Fig. 6 zu erkennen ist, werden zum Zeitpunkt t1 die Erfassungspunkte 18 bis 21 erhalten. Im einem Ausführungsbeispiel wird auf Basis dieser dann bis dahin vorliegenden tatsächlich erhaltenen Messpunkte beziehungsweise Erfassungspunkte 15, 18 bis 21, die Ultraschallsensorinformationen darstellen, auf Basis des Beurteilungsmodells eine Annahme getroffen, dass hier mit einer ersten Wahrscheinlichkeit ein dynamisches Objekt A und B vorliegen könnte, wie dies bereits oben erläutert wurde.

Es können dazu zusätzliche Informationen des Kraftfahrzeugs, wie beispielsweise die Geschwindigkeit und/oder der Ort berücksichtigt werden. Zusätzlich oder anstatt dazu können auch Informationen der Ultraschall-Detektionseinrichtung 4 berücksichtigt werden. Insbesondere können auch Informationen über Geometrien und Ausgestaltungen von Objekten und deren Fortbewegungsszenarien, die als Referenzgrößen in der Auswerteeinrichtung 3 abgelegt sein können, berücksichtigt.

Auf Basis dieser Informationen kann dann vorgesehen sein, wie ebenfalls dargelegt, dass Zustandsvektoren bestimmt werden. Ein Zustandsvektor gibt in dem Zusammenhang auf Basis eines zugrundegelegten Bewegungsmodells wie beispielsweise des Near-Constant-Velocity-Modells eine Aussage über die Geschwindigkeit und die Position eines diesbezüglich als dynamisches Objekt vermuteten Objekts.

In dem Zusammenhang kann dann, wenn für eine weitere, mit höherer Aussagewahrscheinlichkeit zu beurteilende Klassifikation eines Objekts als dynamisches Objekt zusätzliche Beurteilungsschritte erfolgen sollen, zum Zeitpunkt t1 dann auf Basis der bisher erhaltenen Informationen eine Vorklassifikation durchgeführt werden. In dem Zusammenhang würde bei dem Ausführungsbeispiel gemäß Fig. 6 vorgesehen sein, dass die Objekt A und B als dynamisch vorzuklassifizieren sind.

Im dargelegten Ausführungsbeispiel wird dann nach dieser Vorklassifikation ein weiterer Beurteilungsschritt durchgeführt, der eine noch präzisere Aussage über ein mögliches dynamisches Objekt zulässt, und somit eine Beurteilung eines möglichen dynamischen Objekts mit höherer Wahrscheinlichkeit zulässt. In dem Zusammenhang wird dann vorzugsweise auf Basis der bisher erhaltenen Informationen, insbesondere der bisherigen erfassten und tauglichen Erfassungspunkte und der Zustandsvektoren, eine Vorhersage gemacht, an welcher Stelle in der Zukunft ein weiterer Erfassungspunkt sein müsste, wenn das bisher vorklassifizierte Objekt mit dann noch höherer Wahrscheinlichkeit ein dynamisches Objekt ist.

In dem Zusammenhang wird dann insbesondere einem Zeitfenster zwischen einem Zeitpunkt t1, zu dem dann bereits der zweite Erfassungszyklus abgeschlossen ist, und vor dem bereits erwähnten Zeitpunkt t2, zu dem ein dann dritter Erfassungszyklus gestartet wird, eine derartige Prädiktion vorgenommen.

Wie dazu beispielhaft in Fig. 6 dann dargestellt ist, wird ein zukünftig zu erwartender Erfassungspunkt 29 sowie ein zukünftig zu erwartender Erfassungspunkt 30 durch das Beurteilungsmodell bestimmt. Dazu können dann auch wiederum entsprechende Zustandsvektoren generiert werden.

Wie ebenfalls bereits dargelegt, wird in vorteilhafter Ausführung vorgesehen, dass die Beurteilungszonen gebildet werden. Im Ausführungsbeispiel ist vorgesehen, dass um den zu erwartenden Erfassungspunkt 29 eine erste Beurteilungszone 31 gebildet wird, die im Ausführungsbeispiel ein Kreis ist. Diese Beurteilungszone 31 kann jedoch auch, wie bereits erwähnt, auch anderweitig geformt sein, und beispielsweise auch eine Ellipse sein. Durch eine derartige Erzeugung einer Beurteilungszone 31 wird quasi ein gewisser Unschärfebereich beziehungsweise ein Toleranzbereich erzeugt, innerhalb dem dann in einem insbesondere dann erst nachfolgend zum Zeitpunkt t2 startenden dritten Erfassungszyklus tatsächlich erhaltene Erfassungspunkte liegen sollten, um dann weiter als dynamische Erfassungspunkte beurteilt zu werden, und welche dann die Einschätzung, dass das detektierte Objekt ein dynamisches Objekt ist, weiter erhöhen.

Darüber hinaus wird im Ausführungsbeispiel auch eine erste Beurteilungszone 32, die ebenfalls beispielsweise ein Kreis ist, um den zu erwartenden Erfassungspunkt 30 gezogen.

Wird dann zum Zeitpunkt t2 ein im Ausführungsbeispiel dritter Erfassungszyklus durchgeführt, so treten gemäß der beispielhaften Darstellung in Fig. 6 innerhalb der Beurteilungszone 31 die tatsächlich erhaltenen Erfassungspunkte 24 und 25 auf. Darüber hinaus treten die weiteren Erfassungspunkte 23 sowie26, 27, 28 auf, die außerhalb dieses Kreises beziehungsweise der Beurteilungszone 31 liegen, wobei die Erfassungspunkte 26 bis 28 jedoch in der Beurteilungszone 32 liegen. Auf Basis des Beurteilungsmodells wird hier dann erkannt, dass sich die Wahrscheinlichkeit, dass es sich bei dem detektierten Objekt um ein dynamisches Objekt handelt, erhöht. Denn, wie bereits oben dargelegt, wird durch den Erfassungspunkt 25 den vorhergesagten und somit erwarteten Annahmen Rechnung getragen werden und die Wahrscheinlichkeit, dass das Objekt A ein dynamisches Objekt ist, wird erhöht. Entsprechendes ist bzgl. der Erfassungspunkte 26 bis 28 für das Objekt B zu sagen. Der weitere Erfassungspunkt 23 wird im Ausführungsbeispiel für die Objekte A und B nicht mehr berücksichtigt, da sie gegebenenfalls von anderen Objekten stammen, die dann beispielsweise statisch sein können oder anderweitige dynamische Objekte sein können. Entsprechendes erfolgt für die Erfassungspunkte 21 und 24.

Die Erfassungspunkte 21, 23 und 24 werden vorzugsweise jedoch für die weitere Verarbeitung abgespeichert.

Darüber hinaus ist in der gezeigten Ausführung vorgesehen, dass in der Beurteilungszone 32 beispielhaft die drei Erfassungspunkte 26 bis 28 detektiert wurden.

Wie beispielhaft zu diesem Zeitpunkt t2 dann auch dargestellt ist, können die mit unterschiedlichem Abstand zum zu erwartenden Erfassungspunkt 33 auftretenden Erfassungspunkte 26 bis 28 auch noch gewichtet werden. Dadurch kann dann aus diesen drei in der Beurteilungszone 32 liegenden, tatsächlich gemessenen Erfassungspunkten 26 bis 28 der gemittelte gemeinsame Erfassungspunkt 33 bestimmt werden.

Wie darüber hinaus beispielhaft dann in Fig. 6 weiter gezeigt ist, kann auf Basis dieses gemittelten Erfassungspunkts 33 und/oder auch den vorhergehenden, zu den Zeitpunkten t0 und t1 erhaltenen Informationen eine weitere Vorhersage auf Basis des Beurteilungsmodells erfolgen, um die Wahrscheinlichkeit, dass es sich bei dem Objekt B um ein dynamisches Objekt handelt, gegebenenfalls weiter vergrößern zu können. Dazu wird in einem Zeitintervall nach Abschluss des dritten Erfassungszyklus und insbesondere auch vor einem Zeitpunkt t3, zu welchem ein vierter Erfassungszyklus beginnt, wiederum eine für die Zukunft erfolgende Abschätzung gemacht und ein weiterer zu erwartender Erfassungspunkt 38 bestimmt. Auch hier wird dann wiederum vorzugsweise eine weitere Beurteilungszone, nämlich eine zweite Beurteilungszone 40, um diesen zu erwartenden Erfassungspunkt 38 gebildet.

Wird dann zum Zeitpunkt t3 wiederum ein Erfassungszyklus, nämlich ein vierter Erfassungszyklus, durchgeführt, kann dann wiederum ausgewertet werden, ob sich innerhalb dieser zweiten Beurteilungszone 40 ein oder mehrere tatsächliche Erfassungspunkte darstellen. Beispielhaft ist hier vorgesehen, wie dies bereits oben erläutert wurde, dass weitere Erfassungspunkt 34 bis 36 vorhanden sind.

Insbesondere sind, aufgrund dem oben dargelegten, dann die Erfassungspunkt 34 bis 36 dem dynamischen Objekt B zuzuordnen. Auch hier sind dann diese vorläufigen Beurteilungen mit einer spezifischen Wahrscheinlichkeit versehen und können im Hinblick auf das weitere Beurteilungsszenario berücksichtigt werden.

Wären beispielsweise die Erfassungspunkte 34 und 35 zu verschiedenen Zeitpunkten erfasst, würden sie als statische Erfassungspunkte beurteilt werden. In dem Zusammenhang kann es dann auch vorgesehen sein, dass beispielsweise die zum Zeitpunkt t3 erfassten Erfassungspunkte 34 und 35 zu einem weiteren späteren Zeitpunkt, beispielsweise zum Zeitpunkt t4, zu dem dann wiederum Erfassungspunkte auftreten, dahingehend beurteilt werden, dass sie nicht statisch waren, sondern tatsächlich auch dynamisch waren. Es kann dann ein Umschreiben der zunächst zum Zeitpunkt t3 als statisch beurteilten Erfassungspunkte 34 und 35 erfolgen und diese dann nachträglich als dynamische Erfassungspunkte beurteilt werden.

Durch ein ebenfalls bereits oben dargelegtes Fortschreiten des Aktualisierens auf Basis von in der Vergangenheit liegenden Informationen, vorhergesagten Informationen und zukünftig zu erwartenden Informationen kann die Vorhersagegenauigkeit, ob es sich um ein dynamisches Objekt handelt, sukzessive erhöht und präzisiert werden. Es ist vorgesehen, dass eine dann tatsächliche abschließende finale Klassifikation und Beurteilung, ob es sich bei einem detektierten Objekt um ein dynamisches Objekt handelt, im Bereich zwischen fünf und zehn Erfassungszyklen erfolgt, wobei dies nur Beispielwerte sind.

Die bereits oben geschilderten Abläufe zur Klassifikation dynamischer Objekte, nämlich die Eigenbewegungskompensation, die Positionsbestimmung, einer Erfassungspunkt-Assoziation und eine Vorklassifikation sowie eine Zustandsprädiktion, als auch eine Hypothesen-Objekt-Assoziation beziehungsweise eine Erfassungspunkt-Objekt-Assoziation, als auch eine Objektinnovation und das Objektmanagement wurden im Rahmen der beispielhaften Darstellung in Fig. 6 erläutert.

Ein dann tatsächlich als dynamisches Objekt erkanntes Objekt wird dann, wie bereits zu Fig. 3 geschildert, in die Umgebungsbereichskarte 10 eingezeichnet beziehungsweise nahezu in Echtzeit aktualisiert.

Es soll nun nochmals kurz auf die Darstellung in Fig. 6 eingegangen werden. Für die bereits angesprochene Assoziation von Erfassungspunkten zu einem dynamischen Objekt kann insbesondere eine einfache Metrik, beispielsweise in Form der Mahalanobis-Distanz zugrundegelegt werden. Wie bereits in Fig. 6 zum Zeitpunkt t2 beispielhaft gezeigt, kann die Aktualisierungsposition durch das mit der Mahalanobis-Distanz gewichtete arithmetische Mittel aller Positionen der Erfassungspunkte 26 bis 28, die innerhalb der Beurteilungszone 32 liegen, erfolgen. Diese Beurteilungszone 32 stellt somit auch einen Erwartungsbereich dar. Dies gilt natürlich insbesondere auch für die bereits erläuterten Beurteilungszonen 31, 39 und 40. Der Erwartungsbereich ist hier vorzugsweise durch einen Maximalwert für die Mahalanobis-Distanz definiert. Insbesondere wird dabei die Formel

$$x_{av} = \left( \frac{1}{\sum_{i=1}^{N} \frac{1}{d_i^{mh}}_i} \right) \left( \sum_{i=1}^{N} \frac{x_i}{d_i^{mh}} \right)$$

erhalten.

Diese Art der Bestimmung erlaubt eine einfache Modellierung der Ausdehnung des Fußgängers als Objekt 12, ohne ein bestehendes Filtermodell stark modifizieren zu müssen. Dadurch wird der Rechenaufwand deutlich reduziert und dennoch eine hohe Präzision der Aussage erreicht.

Bei dem Beispiel in Fig. 6 wird somit der gemittelte Erfassungspunkt 33 erreicht, der sich wie folgt ergibt:

$$x_{av} = \left( \frac{1}{\frac{1}{10} + \frac{1}{3.33} + \frac{1}{1.67}} \right) \left( \frac{x_1}{10} + \frac{x_2}{3.3} + \frac{x_3}{1.67} \right) = 0.1 x_1 + 0{,}3 x_2 + 0.6 x_3$$

Weiterhin ist zu erwähnen, dass eine Zuordnung einer Hypothese beziehungsweise eines Erfassungspunkts zu einem dynamischen Objekt nicht exklusiv sein muss. Dies bedeutet, dass ein Erfassungspunkt einer Aktualisierung auch von mehreren dynamischen Objekten zugrundegelegt werden kann, wie dies beispielsweise für den Erfassungspunkt 15 erfolgt ist. Die Erwartung ist, dass diese Art der Zuordnung ein Wegfallen von Messpunkten durch falsche Zuordnungen verhindert.

Für eine Aktualisierung eines dynamischen Objekts und somit die Vorklassifikation eines Objekts mit höherer Wahrscheinlichkeit dahingehend, dass es ein dynamisches Objekt ist, kann vorzugsweise ein Alpha-Beta-Filter zugrundegelegt werden. Ein derartiger Filter ist beispielsweise ein linearer Kalman-Filter mit konstantem sogenanntem Gain.

Im Ausführungsbeispiel gemäß Fig. 6 ist somit, wie bereits erläutert, vorgesehen, dass der eine Erfassungspunkt 15 zum Zeitpunkt t0 im Zeitpunkt t1 mehreren dynamischen Objekten A und B zugeordnet wird. Die jeweiligen Zustandsvektoren des zugrundegelegten dynamischen Modells ergeben sich dabei aus der letzten gemessenen Position sowie der Geschwindigkeit, die sich wiederum aus der Differenz der Positionsmessungen der Erfassungszyklen zum Zeitpunkt t0 und t1 ergeben.

Weiterhin werden Initialwerte für die Kovarianz und die Güte gesetzt. Die zur Initialisierung zugrundegelegten Erfassungspunkte werden als dynamisch klassifiziert. Es erweist sich in dem Zusammenhang als praktikabel, wenn ein eben initialisiertes dynamisches Objekt auf einen Status "unsichtbar" gesetzt wird. Dann können die Hypothesen beziehungsweise Erfassungspunkte auch noch nicht in die Umgebungskarte eingetragen werden.

Allgemeine kann nochmals erwähnt werden, dass ein dynamisches Objekt mit einer gewissen Genauigkeit durch das Beurteilungsmodell geschätzt wird. Während auf die Messungen aus einem nächsten Messzyklus gewartet wird, bewegt sich das dynamische Objekt. Da jedoch nicht bekannt ist, wie sich diese Objekt wirklich bewegt (es wird auf Basis der erwarteten Erfassungspunkte nur eine Modell-Annahme dazu zugrunde gelegt) sinkt die Genauigkeit der Vorhersage. Sobald neue Messungen mit Erfassungspunkten vorliegen, können diese verwenden werden, um die Schätzung des dynamischen Objektes zu verbessern, und damit die Genauigkeit der Vorhersage erhöhen.

Bei einer Nichtbestätigung und somit bei einem Vorliegen von keinen zusätzlichen Messpunkten innerhalb einer Beurteilungszone wird die Güte des dynamischen Objekts angepasst, was bedeutet, dass sie gleichgelassen wird oder insbesondere im Allgemeinen reduziert wird. Die Güte wird insbesondere immer angepasst, unabhängig von den Lebenszeitkriterien. Die Lebenszeitkriterien entscheiden hier nur, ob ein Objekt gelöscht wird.

Diese Veränderung der Güte beziehungsweise Aussagewahrscheinlichkeit über ein dynamisches Objekt kann abhängig von den bisher erhaltenen Informationen und somit den bisher tatsächlich festgestellten Erfassungspunkten und/oder abhängig von der bisher durchgeführten Anzahl an Erfassungszyklen erfolgen. Darüber hinaus kann auch das Berücksichtigen von weiteren Entscheidungskriterien erfolgen.

Bei dem ebenfalls bereits angesprochenen Objektmanagement werden die zu einem sichtbaren dynamischen Objekt (mit ausreichend hoher Güte) zugeordneten Erfassungspunkte (Hypothesen) in die Umgebungsbereichskarte 10 eingezeichnet. Der Bestätigungsstatus der Hypothese bzw. des Erfassungspunkts wird dann mit einem der Güte des dynamischen Objekts entsprechenden Wert versehen sowie der Status der Hypothese bzw. des Erfassungspunkts auf "bestätigt" dynamisch gesetzt. Dieser Erfassungspunkt wird dann für einen Eintrag in die Umgebungskarte beziehungsweise die Umgebungsbereichskarte 10 vorgesehen.

Es kann auch vorgesehen sein, dass das dynamische Objekt insbesondere mit allen seinen Attributen in die Umgebungsbereichskarte 10 eingetragen wird.

Des Weiteren erhöhen zusätzliche Assoziationen die Güte beziehungsweise die Aussagewahrscheinlichkeit des Objekts bis zu einem vorgegebenen Maximalwert. Wird dieser Maximalwert dann innerhalb eines wiederum vorgegebenen Intervalls für eine Anzahl von Erfassungszyklen erreicht, wird das Objekt mit dann ausreichender, insbesondere sehr hoher Wahrscheinlichkeit als dynamisches Objekt erkannt.

Sinkt durch eine fehlende Aktualisierung die Güte und somit die Aussagewahrscheinlichkeit unter einen gewissen weiteren unteren Güteschwellwert, wird das Objekt zunächst vorzugsweise auf "unsichtbar" gesetzt und dann nicht mehr in der Umgebungskarte angezeigt. Bleiben auch im Weiteren Aktualisierungen aus, so sinkt die Güte weiter ab, bis ab einem definierten, vom Schwellwert für die Sichtbarkeit unterschiedlichen, Schwellwert, das dynamische Objekt gelöscht wird.

Eine weitere mögliche Bedingung zum Löschen prüft die Zeit, die seit dem letzten Aktualisieren vergangen ist. Dadurch wird verhindert, dass Objekte mit hoher Güte außerhalb des Detektionsbereichs lange im System verbleiben und aufbewahrt werden.

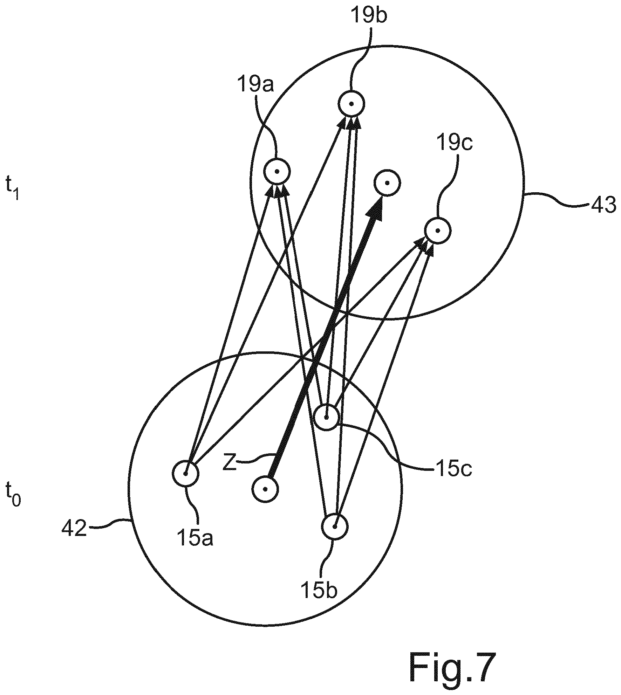

In Fig. 7 ist in einem weiteren Beispiel eine skizzenhafte Darstellung gezeigt, bei welcher ein weiteres unterschiedliches Szenario dargestellt ist. Hier ist zu erkennen, dass beispielsweise zum Zeitpunkt t0 eine Mehrzahl von Erfassungspunkten 15a, 15b und 15c vorhanden sind. Insbesondere auf Basis deren Abstand zueinander und/oder aufgrund eines Vorhandenseins innerhalb einer Beurteilungszone 42 werden diese als separate Erfassungspunkte beurteilt. Wird zu einem dann nachfolgenden zweiten Zeitpunkt t1 ein weiterer Erfassungszyklus durchgeführt und treten hier wiederum mehrere Erfassungspunkte 19a, 19b und 19c innerhalb einer weiteren Beurteilungszone 43 auf, so kann zwischen jedem der Erfassungspunkte 15a bis 15c ein jeweils separater Zustandsvektor zu den Erfassungspunkten 19a bis 19c gebildet werden beziehungsweise abhängig von diesen jeweiligen Informationen der Erfassungspunkte 15a bis 15c und 19a bis 19c ein eigener Zustandsvektor generiert werden.

Für die Initialisierung neuer dynamischer Objekte werden nun alle Erfassungspunkte 15a bis 15c mit allen Erfassungspunkten 19a, 19b und 19c verglichen, und wenn die bereits oben genannten Initialisierungskriterien (maximale Distanz zwischen den Erfassungspunkten, minimale Distanz zwischen den Erfassungspunkten, maximale resultierende Initialgeschwindigkeit, ...) erfüllt sind, werden neue dynamische Objekte generiert. Im Allgemeinen kann dies zu vielen sehr ähnlichen dynamischen Objekten führen. Genauso kann es vorkommen, dass um ein dynamisches Objekt weitere, als möglicherweise dynamisch klassifizierte Erfassungspunkte gemessen werden, und welche dann zu neuen dynamischen Objekten führen, die dem älteren dynamischen Objekt sehr ähnlich sind. Um zu verhindern, dass sehr viele ähnliche dynamische Objekte existieren, die um Erfassungspunkte konkurrieren, werden alle ähnlichen dynamischen Objekte zu einem einzelnen gemeinsamen dynamischen Objekt verrechnet, welches in Fig. 7 durch den symbolhaften Bewegungspfeil Z dargestellt ist. Dies erfordert ein geeignetes Kriterium, wann dynamische Objekte ähnlich zueinander sind. Ein einfaches Kriterium wäre beispielsweise die Distanz zwischen den Positionen der dynamischen Objekte sowie die Differenz der Geschwindigkeiten.

Hier erweist es sich somit dann als vorteilhaft, wenn auf Basis dieser multiplen Informationen ein dynamisches Repräsentanz-Objekt Z gebildet wird.

Es kann auch vorgesehen sein, dass die hier vorliegenden Informationen, die allesamt auf Basis der Ultraschallsensoren 5a bis 6f gebildet werden, mit Informationen von zusätzlichen unterschiedlichen Sensortypen, die am Kraftfahrzeug 1 angeordnet sind, fusioniert werden. So kann das Kraftfahrzeug 1 auch zusätzlich noch zumindest eine Kamera und/oder einen Radarsensor und/oder einen Lidar-Sensor aufweisen. Darüber hinaus können auch individuelle weitere Filter und/oder andere Filter für das Beurteilungsmodell vorgesehen werden, durch welche dann noch eine schnellere und genauere Klassifikation vorgenommen werden könnte. Beispielsweise kann hier dann ein sogenannter extended Kalman-Filter oder ein Particle-Filter vorgesehen sein.

Durch das Beurteilen auf Basis des Beurteilungsmodells, ob ein Objekt dynamisch oder statisch ist, kann lediglich durch die Informationen der Ultraschallsensoren diesbezüglich eine Aussage getroffen werden. Damit kann eine genauere Analyse der Objekte dahingehend, ob sie sich bewegen oder nicht, nur auf Basis der Ultraschallsensorinformationen gewonnen werden. Indem das Beurteilungsmodell diesbezüglich mehrstufig durchgeführt wird, kann eine diesbezügliche Aussagewahrscheinlichkeit erhöht werden. Durch das Beurteilungsmodell wird somit in dieser Mehrstufigkeit, welche vorzugsweise zumindest drei Beurteilungsstufen umfasst und somit zu zumindest zu zumindest drei verschiedenen Erfassungszyklen Informationen liefert, auch eine Vorklassifikation erfolgen. Soll eine derartige Vorklassifikation nicht durchgeführt werden, so reichen für das Beurteilungsmodell auch bereits Ultraschallsensorinformationen von zumindest zwei unterschiedlichen Erfassungszyklen. Auf Basis der Ultraschallsensorinformationen kann dann insbesondere durch das Beurteilungsmodell auch eine Vorhersage erfolgen, die es ermöglicht, dann anhand von zusätzlichen, zukünftig erhaltenen tatsächlichen Erfassungspunkten diese zu überprüfen. Dadurch lassen sich Aussagewahrscheinlichkeiten verfeinern und somit präzisieren.

Nicht zuletzt ist auch eine wesentliche vorteilhafte Weiterbildung darin zu sehen, dass vorhandene und vorläufig beurteilte Erfassungspunkte mit statisch oder dynamisch anhand von vorhergesagten Informationen und in der Zukunft erhaltenen tatsächlichen Informationen beschrieben werden können, sodass auch hier eine äußerst dynamische Aktualisierung und Veränderung ermöglicht wird. Dadurch lassen sich durch unterschiedlichste und auch sehr komplexe Beurteilungsszenarien Informationen mit hoher Aussagewahrscheinlichkeit erzeugen. Das somit dann auch durchgeführte Objektmanagement im Rahmen des Beurteilungsmodells ist vorteilhafterweise ebenfalls eine sehr hervorzuhebende Ausführung, da somit die Strukturierung der Beurteilung wesentlich erhöht wird und die Übersichtlichkeit auch bei komplexen Beurteilungsszenarien und vielen Objekten in dem Umgebungsbereich des Kraftfahrzeugs gewahrt bleibt. Insbesondere kann somit dann eine äußerst aktualisierte, übersichtliche und bezüglich der Objektdarstellung sehr korrekte Umgebungskarte bereitgestellt werden, die auch einfach und zuverlässig das Darstellen und Unterscheidenkönnen von statischen und dynamischen Objekten auf Basis von Ultraschallsensorinformationen ermöglicht.

**Patentansprüche**

1. Verfahren zum Erfassen eines Objekts (12, 13, 14) in einem Umgebungsbereich (7, 7', 8, 8') eines Kraftfahrzeugs (1, 1'), bei welchem mit zumindest einer kraftfahrzeugseitigen Ultraschall-Detektionseinrichtung (4) eines Parkassistenzsystems der Umgebungsbereich (7, 7', 8, 8') erfasst wird,

   wobei zu zumindest zwei verschiedenen Zeitpunkten (t0, t1, t2, t3) jeweils ein Erfassungszyklus zum Erfassen des Umgebungsbereichs (7, 8) mit der Ultraschall-Detektionseinrichtung (4) durchgeführt wird, und die in den beiden Erfassungszyklen erfassten Informationen über ein Objekt (12, 13, 14) in dem Umgebungsbereich (7, 8) einem Beurteilungsmodell bereitgestellt werden, wobei mit dem Beurteilungsmodell abhängig von diesen Informationen der Ultraschall-Detektionseinrichtung (4) beurteilt wird, ob das Objekt (12, 13, 14) als ein dynamisches Objekt (12) klassifiziert wird, und wobei eine Parklücke als geeignet erkannt wird, wenn ein innerhalb dieser Parklücke detektiertes Objekt als dynamisch klassifiziert und erkannt wird, **gekennzeichnet dadurch dass** dieses dynamische Objekt (12) weiterverfolgt wird, und erkannt wird, in welche Richtung es sich bewegt, und

dadurch dass auf Basis der bereits ebenfalls detektierten, weiteren Begrenzungen der vermeintlichen Parklücke eine Vorhersage getroffen wird, wann das dynamische Objekt die Parklücke ausreichend verlassen hat, dass ein Einparken des Kraftfahrzeugs (1, 1') möglich ist.

2. Verfahren nach Anspruch 1,
   **dadurch gekennzeichnet, dass**
   für die Beurteilung des Objekts (12, 13, 14) als dynamisches Objekt (12) auf Basis von als Informationen erfassten Erfassungspunkten zumindest ein modelliertes dynamisches Objekt durch das Beurteilungsmodell initialisiert wird, wobei dazu abhängig von einem als Information eines Erfassungszyklus erfassten Erfassungspunkts und einem als Information eines weiteren Erfassungszyklus erfassten weiteren Erfassungspunkts ein vorläufig als dynamisch modelliertes Objekt generiert wird und für die weitere Beurteilung des Objekts im Umgebungsbereich (7, 8) als tatsächliches dynamisches Objekt (12) berücksichtigt wird, insbesondere die für die Generierung des modellierten dynamischen Objekts berücksichtigen Erfassungspunkte anhand von zumindest Abständen von Erfassungspunkten berücksichtigenden Auswahlkriterien zunächst ausgewählt werden.

3. Verfahren nach Anspruch 1 oder 2,
   **dadurch gekennzeichnet, dass**
   abhängig von als Informationen eines Erfassungszyklus und eines weiteren Erfassungszyklus erfassten Erfassungspunkten zumindest ein durch das Beurteilungsmodell modelliertes vorläufiges dynamisches Objekt charakterisierter Zustandsvektor ($x_{state}$) erzeugt wird, wobei abhängig von dem zumindest einen Zustandsvektor ($x_{state}$) durch das Beurteilungsmodell zumindest ein weiterer, zukünftig zu erwartender Erfassungspunkt vorhergesagt wird, der für die Beurteilung des Objekts als dynamisches Objekt (12) berücksichtigt wird.

4. Verfahren nach Anspruch 3,
   **dadurch gekennzeichnet, dass**
   um zumindest einen zukünftig zu erwartenden Erfassungspunkt (29, 30, 37, 38) eine Beurteilungszone (22, 31, 32, 39, 40) erzeugt wird und überprüft wird ob zu einem auf die beiden ersten Zeitpunkte (t0, t1) folgenden weiteren Zeitpunkt (t2, t3) zumindest ein in einem auf die beiden ersten Erfassungszyklen folgenden weiteren Erfassungszyklus erfasster Erfassungspunkt in der Beurteilungszone (22, 31, 32, 39, 40) liegt, wobei im Falle, dass ein erfasster Erfassungspunkt des weiteren Erfassungszyklus innerhalb der Beurteilungszone (22, 31, 32, 39, 40) liegt, dieser Erfassungspunkt als dynamisch klassifiziert wird, und für die Beurteilung des Objekts als dynamisches Objekt (12) berücksichtigt wird.

5. Verfahren nach Anspruch 3 oder 4,
   **dadurch gekennzeichnet, dass**
   die Wahrscheinlichkeit für das Vorhandensein eines dynamischen Objekts (12) erhöht wird, wenn das Objekt durch den Erfassungspunkt in der Beurteilungszone (22, 31, 32, 39, 40) und den Erfassungspunkten des einen und des weiteren Erfassungszyklus, auf Basis derer zumindest ein Zustandsvektor erzeugt wird, von welchem abhängig der zukünftig zu erwartende Erfassungspunkt (29, 30, 37, 38) erzeugt wird, charakterisiert wird.

6. Verfahren nach einem der Ansprüche 3 bis 5,
   **dadurch gekennzeichnet, dass**
   um den zu erwartenden Erfassungspunkt (29, 30, 37, 38) eine erste Beurteilungszone (22, 31, 32, 39, 40) erzeugt wird und bei einem auf den zweiten Zeitpunkt folgenden weiteren Zeitpunkt ein weiterer Erfassungszyklus durchgeführt wird und bei einem Vorhandensein von zumindest zwei Erfassungspunkten des zu dem weiteren Zeitpunkt durchgeführten weiteren Erfassungszyklus in der weiteren Beurteilungszone (22, 31, 32, 39, 40) die beiden Erfassungspunkte abhängig von deren jeweiligen Abstand zu dem erwarteten Erfassungspunkt (29, 30, 37, 38) gewichtet werden und aus den gewichteten Erfassungspunkten ein gemittelter Erfassungspunkt (25, 33, 41) bestimmt wird.

7. Verfahren nach einem der vorhergehenden Ansprüche, **dadurch gekennzeichnet, dass** eine gewisse Bewegungsrichtung und/oder Bewegungsgeschwindigkeit des detektierten dynamischen Objekts (12) erfasst und vorhergesagt wird und auf Basis dieser Informationen eine Zeitdauer bestimmt wird, innerhalb derer das dynamische Objekt (12) den Bereich der Parklücke verlassen hat.

8. Verfahren nach einem der vorhergehenden Ansprüche, **dadurch gekennzeichnet, dass** eine Parklücke als geeignet erkannt wird, wenn bezüglich zumindest vorhergesagter Informationen über die Richtung und/oder die Geschwindigkeit des weiteren Fortbewegens des dynamischen Objekts (12) ein Vergleich mit einem Zeitdauer-Schwellwert erfolgt, und

wenn eine dann geschätzte Zeitdauer, bis zu welcher das dynamische Objekt (12) die Parklücke verlassen haben wird, kleiner als dieser Zeitdauer-Schwellwert ist, die Parklücke als geeignet angeboten wird.

9. Verfahren nach einem der vorhergehenden Ansprüche,
**dadurch gekennzeichnet, dass**
um einen Erfassungspunkt eines Erfassungszyklus eine Beurteilungszone (22, 31, 32, 39, 40) erzeugt wird und überprüft wird, ob ein Erfassungspunkt eines weiteren Erfassungszyklus in der Beurteilungszone (22, 31, 32, 39, 40) liegt, wobei die Erfassungspunkte als statisch beurteilt werden, wenn sie innerhalb der Beurteilungszone (22, 31, 32, 39, 40) liegen, wobei diese statischen Erfassungspunkte bei der Beurteilung des Objekts als dynamisches Objekt (12) in einer Vorklassifikationsstufe des Beurteilungsmodells unberücksichtigt bleiben, insbesondere jedoch abgespeichert werden und bei einem nachfolgenden Beurteilungsschritt abhängig von den Bedingungen des nachfolgenden Beurteilungsschritt wieder berücksichtigt werden.

10. Verfahren nach Anspruch 9,
**dadurch gekennzeichnet, dass**
die Erfassungspunkte nur dann als statische Erfassungspunkte vorklassifiziert werden, wenn sich kein bereits vorhandenes, insbesondere mit ausreichender Güte bewertetes, dynamisches Objekt innerhalb eines vorgegeben Umgebungsbereichs (7, 8) um die Erfassungspunkte befindet.

11. Verfahren nach Anspruch 9 oder 10,
**dadurch gekennzeichnet, dass**
ein als statisch vorklassifizierter Erfassungspunkt in einem weiteren nachfolgenden Beurteilungsschritt in einen dynamischen Erfassungspunkt geändert wird, wenn in dem nachfolgenden Beurteilungsschritt, insbesondere bei einem eine Beurteilung auf Basis von in einem auf den Klassifikationsschritt als statischer Erfassungspunkt folgenden weiteren Erfassungszyklus durchführenden nachfolgenden Beurteilungsschritt, ein mit einer einen Güte-Schwellwert übersteigenden Güte initialisiertes dynamisches Objekt innerhalb eines Umgebungsbereichs um den Erfassungspunkt erkannt wird.

12. Verfahren nach einem der vorhergehenden Ansprüche,
**dadurch gekennzeichnet, dass**
bei einem, insbesondere bei jedem, Erfassungszyklus, bei dem ein Erfassungspunkt für die Beurteilung, ob ein Objekt dynamisch ist, assoziiert wird und das Objekt als dynamisch charakterisiert wird, eine Aussagegüte bezüglich dem tatsächlichen Vorhandensein eines dynamischen Objekts (12) erhöht wird und der Beurteilungsstatus über das Objekt aktualisiert wird.

13. Verfahren nach einem der vorhergehenden Ansprüche,
**dadurch gekennzeichnet, dass**
ein Objekt als tatsächlich dynamisch beurteilt wird, wenn es mit einer Anzahl, insbesondere größer oder gleich 5, größer einem Klassifikationsanzahlschwellwert als dynamisch vorklassifiziert wird.

14. Verfahren nach einem der vorhergehenden Ansprüche,
**dadurch gekennzeichnet, dass**
ein Erfassungspunkt (15) eines Erfassungszyklus in zumindest einem nachfolgenden Erfassungszyklus für die Beurteilung der Dynamik von zumindest zwei verschiedenen Objekten berücksichtigt wird.

15. Verfahren nach einem der vorhergehenden Ansprüche,
**dadurch gekennzeichnet, dass**
ein mit der Ultraschall-Detektionseinrichtung (4) erfasstes und als dynamisches Objekt (12) beurteiltes Objekt in eine Umgebungsbereichskarte (10), die den Umgebungsbereich (7, 8) darstellt, eingetragen wird.

16. Verfahren nach einem der vorhergehenden Ansprüche,
**dadurch gekennzeichnet, dass**
bei einem Beurteilen einer Parklücke zum Einparken des Kraftfahrzeugs (1) die Beurteilung eines als dynamisches Objekt (12) erkannten Objekts berücksichtigt wird, und die Parklücke als geeignet erkannt wird, wenn das dynamische Objekt (12) in der Parklücke erfasst wird.

17. Verfahren nach einem der vorhergehenden Ansprüche,

**EP 3 156 820 B1**

**dadurch gekennzeichnet, dass**
die Ultraschall-Detektionseinrichtung (4) mit zumindest zwei Ultraschallsensoren (5a bis 5f, 6a bis 6f) ausgebildet wird und bei einem Erfassungszyklus ein einmaliges Aussenden eines Ultraschallsignals eines ersten Ultraschallsensors (5a bis 5f, 6a bis 6f) und das Empfangen des von einem Objekt (12, 13, 14) reflektierten Echosignals durch den zweiten Ultraschallsensors (5a bis 5f, 6a bis 6f) durchgeführt wird, sowie das Aussenden eines Ultraschallsignals des zweiten Ultraschallsensors (5a bis 5f, 6a bis 6f) und das Empfangen des von einem Objekt reflektierten Echosignals durch den ersten Ultraschallsensor (5a bis 5f, 6a bis 6f) durchgeführt wird.

18. Verfahren nach einem der vorhergehenden Ansprüche,
**dadurch gekennzeichnet, dass**
mit dem Beurteilungsmodell ein Objektmanagement durchgeführt wird, wobei dabei in den Erfassungszyklen als dynamisch klassifizierte Erfassungspunkte zumindest einem dynamischen Objekt (12) zugeordnet werden und dadurch zumindest ein neues dynamisches Objekt initialisiert wird und/oder ein als dynamisches Objekt verworfenes Objekt gelöscht wird.

19. Verfahren nach Anspruch 18,
**dadurch gekennzeichnet, dass**
bei der Initialisierung nur derartige dynamische Erfassungspunkte für die Klassifikation eines Objekts als dynamisches Objekt (12) berücksichtigt werden, die einen Güteschwellwert übersteigen.

20. Verfahren nach einem der vorhergehenden Ansprüche,
**dadurch gekennzeichnet, dass**
ein weiterer Bewegungsweg eines als dynamisches Objekt (12) zumindest vorklassifizierten Objekts durch das Beurteilungsmodell vorherbestimmt wird.

21. Parkassistenzsystem (2) für ein Kraftfahrzeug (1) mit einer Ultraschall-Detektionseinrichtung (4) und einer Auswerteeinrichtung (3), welches zum Durchführen eines Verfahrens nach einem der vorhergehenden Ansprüche ausgebildet ist.

**Claims**

1. Method for capturing an object (12, 13, 14) in a surrounding area (7, 7', 8, 8') of a motor vehicle (1, 1'), in which the surrounding area (7, 7', 8, 8') is captured by at least one motor vehicle-side ultrasonic detection device (4) of a parking assistance system, wherein at at least two different points in time (t0, t1, t2, t3) in each case a capture cycle for capturing the surrounding area (7, 8) is carried out by the ultrasonic detection device (4), and the information about an object (12, 13, 14) in the surrounding area (7, 8) that is captured in the two capture cycles is provided to an assessment model, wherein depending on this information of the ultrasonic detection device (4) the assessment model assesses whether the object (12, 13, 14) is classified as a dynamic object (12), and

   wherein a parking gap is recognized as suitable if an object detected within this parking gap is classified and recognized as dynamic, **characterized in that** this dynamic object (12) is tracked and the direction in which it moves is recognized, and
   **in that** on the basis of the further boundaries of the purported parking gap that have already likewise been detected, a prediction is made as to when the dynamic object has left the parking gap to a sufficient extent that parking the motor vehicle (1, 1') is possible.

2. Method according to Claim 1,
   **characterized in that**
   for the assessment of the object (12, 13, 14) as a dynamic object (12) on the basis of capture points captured as information, at least one modelled dynamic object is initialized by the assessment model, wherein for this purpose, depending on one capture point captured as information of one capture cycle and a further capture point captured as information of a further capture cycle, an object provisionally modelled as dynamic is generated and is taken into account for the further assessment of the object in the surrounding area (7, 8) as an actual dynamic object (12), in particular the capture points taken into account for the generation of the modelled dynamic object are initially selected on the basis of selection criteria that take into account at least distances between capture points.

3. Method according to Claim 1 or 2,

**characterized in that**
depending on capture points captured as information of one capture cycle and of a further capture cycle, at least one state vector ($X_{state}$) **characterized by** a provisional dynamic object modelled by the assessment model is generated, wherein depending on the at least one state vector ($X_{state}$) the assessment model predicts at least one further capture point which is to be expected in the future and which is taken into account for the assessment of the object as a dynamic object (12).

4. Method according to Claim 3,
   **characterized in that**
   an assessment zone (22, 31, 32, 39, 40) is generated around at least one capture point (29, 30, 37, 38) to be expected in the future and a check is made to ascertain whether at a further point in time (t2, t3) following the first two points in time (t0, t1), at least one capture point captured in a further capture cycle following the first two capture cycles lies in the assessment zone (22, 31, 32, 39, 40), wherein in the case where a captured capture point of the further capture cycle lies within the assessment zone (22, 31, 32, 39, 40), this capture point is classified as dynamic and is taken into account for the assessment of the object as a dynamic object (12).

5. Method according to Claim 3 or 4,
   **characterized in that**
   the probability of the presence of a dynamic object (12) is increased if the object is **characterized by** the capture point in the assessment zone (22, 31, 32, 39, 40) and the capture points of said one capture cycle and said further capture cycle which are taken as a basis for generating at least one state vector depending on which the capture point (29, 30, 37, 38) to be expected in the future is generated.

6. Method according to any of Claims 3 to 5,
   **characterized in that**
   a first assessment zone (22, 31, 32, 39, 40) is generated around the capture point (29, 30, 37, 38) to be expected and a further capture cycle is carried out at a further point in time following the second point in time and given the presence of at least two capture points of the further capture cycle carried out at the further point in time in the further assessment zone (22, 31, 32, 39, 40), the two capture points are weighted depending on their respective distance from the expected capture point (29, 30, 37, 38) and an averaged capture point (25, 33, 41) is determined from the weighted capture points.

7. Method according to any of the preceding claims, **characterized in that** a certain direction of movement and/or velocity of movement of the detected dynamic object (12) are/is captured and predicted and a time duration within which the dynamic object (12) has left the area of the parking gap is determined on the basis of this information.

8. Method according to any of the preceding claims, **characterized in that** a parking gap is recognized as suitable if, with regard to at least predicted information about the direction and/or the velocity of the further movement of the dynamic object (12), a comparison with a time duration threshold value takes place, and
   if a then estimated time duration by which the dynamic object (12) will have left the parking gap is less than said time duration threshold value, the parking gap is offered as suitable.

9. Method according to any of the preceding claims,
   **characterized in that**
   an assessment zone (22, 31, 32, 39, 40) is generated around a capture point of one capture cycle and a check is made to ascertain whether a capture point of a further capture cycle lies in the assessment zone (22, 31, 32, 39, 40), wherein the capture points are assessed as static if they lie within the assessment zone (22, 31, 32, 39, 40), wherein these static capture points are disregarded during the assessment of the object as a dynamic object (12) in a preclassification stage of the assessment model, but in particular are stored and are taken into account again during a subsequent assessment step depending on the conditions of the subsequent assessment step.

10. Method according to Claim 9,
    **characterized in that**
    the capture points are preclassified as static capture points only if no dynamic object already present, and in particular rated with sufficient quality, is situated within a predefined surrounding area (7, 8) around the capture points.

11. Method according to Claim 9 or 10,
    **characterized in that**

a capture point preclassified as static is changed into a dynamic capture point in a further subsequent assessment step if, in the subsequent assessment step, in particular during a subsequent assessment step carrying out an assessment on the basis of a further capture cycle following the classification step as static capture point, a dynamic object initialized with a quality exceeding a quality threshold value is recognized within a surrounding area around the capture point.

12. Method according to any of the preceding claims,
**characterized in that**
during a, in particular during each, capture cycle in which a capture point is associated for the assessment as to whether an object is dynamic, and the object is characterized as dynamic, an informative quality with regard to the actual presence of a dynamic object (12) is increased and the assessment status regarding the object is updated.

13. Method according to any of the preceding claims,
**characterized in that**
an object is assessed as actually dynamic if it is preclassified as dynamic with a number, in particular greater than or equal to 5, greater than a classification number threshold value.

14. Method according to any of the preceding claims,
**characterized in that**
a capture point (15) of a capture cycle is taken into account in at least one subsequent capture cycle for the assessment of the dynamic characteristic of at least two different objects.

15. Method according to any of the preceding claims,
**characterized in that**
an object captured by the ultrasonic detection device (4) and assessed as a dynamic object (12) is entered into a surrounding area map (10) representing the surrounding area (7, 8).

16. Method according to any of the preceding claims,
**characterized in that**
during assessment of a parking gap for parking the motor vehicle (1), the assessment of an object recognized as a dynamic object (12) is taken into account, and the parking gap is recognized as suitable if the dynamic object (12) is captured in the parking gap.

17. Method according to any of the preceding claims,
**characterized in that**
the ultrasonic detection device (4) is formed with at least two ultrasonic sensors (5a to 5f, 6a to 6f) and a capture cycle involves carrying out a single emission of an ultrasonic signal of a first ultrasonic sensor (5a to 5f, 6a to 6f) and the reception of the echo signal reflected from an object (12, 13, 14) by the second ultrasonic sensor (5a to 5f, 6a to 6f), and also carrying out the emission of an ultrasonic signal of the second ultrasonic sensor (5a to 5f, 6a to 6f) and the reception of the echo signal reflected from an object by the first ultrasonic sensor (5a to 5f, 6a to 6f).

18. Method according to any of the preceding claims,
**characterized in that**
object management is carried out by the assessment model, wherein in this case capture points classified as dynamic in the capture cycles are assigned to at least one dynamic object (12) and as a result at least one new dynamic object is initialized and/or an object rejected as a dynamic object is deleted.

19. Method according to Claim 18,
**characterized in that**
during the initialization only such dynamic capture points which exceed a quality threshold value are taken into account for the classification of an object as a dynamic object (12).

20. Method according to any of the preceding claims,
**characterized in that**
a further movement path of an object at least preclassified as a dynamic object (12) is predetermined by the assessment model.

21. Parking assistance system (2) for a motor vehicle (1) comprising an ultrasonic detection device (4) and an evaluation device (3), which system is designed to carry out a method according to any of the preceding claims.

**Revendications**

1. Procédé permettant de détecter un objet (12, 13, 14) dans une zone environnante (7, 7', 8, 8') d'un véhicule automobile (1, 1') dans lequel au moins un équipement de détection (4) à ultrasons côté véhicule automobile d'un système d'aide au stationnement détecte la zone environnante (7, 7', 8, 8'),

   dans lequel, à au moins deux instants différents (t0, t1, t2, t3), respectivement un cycle de détection pour détecter la zone environnante (7, 8) est effectué par l'équipement de détection à ultrasons (4), et les informations détectées dans les deux cycles de détection au sujet d'un objet (12, 13, 14) dans la zone environnante (7, 8) sont fournies à un modèle d'évaluation, dans lequel le modèle d'évaluation évalue en fonction de ces informations de l'équipement de détection à ultrasons (4) si l'objet (12, 13, 14) est classifié en tant qu'objet dynamique (12), et dans lequel une place de stationnement est identifiée comme étant appropriée si un objet détecté à l'intérieur de cette place de stationnement est classifiée comme étant dynamique et est identifié, **caractérisé en ce que** cet objet dynamique (12) est poursuivi, et qu'il est identifié dans quelle direction il se déplace, et
   **en ce que** sur la base des limites supplémentaires, déjà détectées également, de la place de stationnement supposée, une prédiction est effectuée pour savoir quand l'objet dynamique a suffisamment quitté la place de stationnement pour permettre le stationnement du véhicule automobile (1, 1').

2. Procédé selon la revendication 1,
   **caractérisé en ce que**
   pour l'évaluation de l'objet (12, 13, 14) en tant qu'objet dynamique (12) sur la base de points de détection détectés sous forme d'informations, au moins un objet dynamique modélisé est initialisé par le modèle d'évaluation, dans lequel à cet effet, en fonction d'un point de détection détecté sous forme d'informations d'un cycle de détection et d'un point de détection supplémentaire détecté sous forme d'informations d'un cycle de détection supplémentaire, un objet modélisé provisoirement comme étant dynamique et généré et est pris en considération en tant qu'objet dynamique réel (12) pour l'évaluation supplémentaire de l'objet dans la zone environnante (7, 8), en particulier, les points de détection pris en considération pour la génération de l'objet dynamique modélisé sont sélectionnés d'abord à l'aide de critères de sélection prenant en considération au moins des distances par rapport aux points de détection.

3. Procédé selon la revendication 1 ou 2,
   **caractérisé en ce que**
   qu'en fonction de points de détection détectés sous forme d'informations d'un cycle de détection et d'un cycle de détection supplémentaire, au moins un vecteur d'état ($X_{state}$) **caractérisé par** un objet dynamique provisoire, modélisé par le modèle d'évaluation, est généré, dans lequel, en fonction dudit au moins un vecteur d'état ($X_{state}$), le modèle d'évaluation prédit au moins un point de détection supplémentaire attendu à l'avenir est prédit qui est pris en considération pour l'évaluation de l'objet en tant qu'objet dynamique (12).

4. Procédé selon la revendication 3,
   **caractérisé en ce que**
   qu'une zone d'évaluation (22, 31, 32, 39, 40) est générée autour d'au moins un point de détection (29, 30, 37, 38) attendu à l'avenir, et il est vérifié si à un instant supplémentaire (t2, t3) suivant les deux premiers instants (t0, t1) au moins un point de détection détecté dans un cycle de détection supplémentaire suivant les deux premiers cycles de détection se trouve dans la zone d'évaluation (22, 31, 32, 39, 40), dans lequel, si un point de détection détecté du cycle de détection supplémentaire se trouve à l'intérieur de la zone d'évaluation (22, 31, 32, 39, 40), ce point de détection est classifié comme étant dynamique et est pris en considération pour l'évaluation de l'objet en tant qu'objet dynamique (12).

5. Procédé selon la revendication 3 ou 4,
   **caractérisé en ce que**
   la probabilité de la présence d'un objet dynamique (12) augmente lorsque l'objet est **caractérisé par** le point de détection dans la zone d'évaluation (22, 31, 32, 39, 40) et les points de détection dudit un et du cycle de détection supplémentaire sur la base desquels au moins un vecteur d'état est généré en fonction duquel le point de détection (29, 30, 37, 38) attendu à l'avenir est généré.

6. Procédé selon l'une des revendications 3 à 5,

**caractérisé en ce que**

qu'une première zone d'évaluation (22, 31, 32, 39, 40) est générée autour du point de détection attendu (29, 30, 37, 38), et à un instant supplémentaire suivant le deuxième instant, un cycle de détection supplémentaire est effectué, et en cas de présence d'au moins deux points de détection du cycle de détection supplémentaire effectué à l'instant supplémentaire, dans la zone d'évaluation (22, 31, 32, 39, 40) supplémentaire, les deux points de détection sont pondérés en fonction de leur distance respective par rapport au point de détection attendu (29, 30, 37, 38), et un point de détection moyenné (25, 33, 41) est déterminé à partir des points de détection pondérés.

7. Procédé selon l'une quelconque des revendications précédentes, **caractérisé en ce qu'**une certaine direction de mouvement et/ou vitesse de mouvement de l'objet dynamique détecté (12) sont détectées et prédites, et sur la base de ces informations, une durée pendant laquelle l'objet dynamique (12) a quitté la zone de la place de stationnement est déterminée.

8. Procédé selon l'une quelconque des revendications précédentes, **caractérisé en ce qu'**une place de stationnement est identifiée comme étant appropriée si concernant des informations au moins prédites au sujet de la direction et/ou de la vitesse de la suite du mouvement de l'objet dynamique (12) une comparaison avec une valeur seuil de durée est effectuée, et

si une durée estimée alors jusqu'à laquelle l'objet dynamique (12) aura quitté la place de stationnement est inférieure à cette valeur seuil de durée, la place de stationnement est proposée comme étant appropriée.

9. Procédé selon l'une quelconque des revendications précédentes,
**caractérisé en ce que**

qu'une zone d'évaluation (22, 31, 32, 39, 40) est générée autour d'un point de détection d'un cycle de détection, et il est vérifié si un point de détection d'un cycle de détection supplémentaire se trouve dans la zone d'évaluation (22, 31, 32, 39, 40), dans lequel les points de détection sont évalués comme étant statiques s'ils se trouvent à l'intérieur de la zone d'évaluation (22, 31, 32, 39, 40), dans lequel ces points de détection statiques ne sont pas pris en considération lors de l'évaluation de l'objet en tant qu'objet dynamique (12) dans une phase de préclassification du modèle d'évaluation, mais sont en particulier mémorisés et à nouveau pris en considération dans une étape d'évaluation suivante en fonction des conditions de l'étape d'évaluation suivante.

10. Procédé selon la revendication 9,
**caractérisé en ce que**

les points de détection ne sont préclassifiés en tant que points de détection statiques que si aucun objet dynamique déjà présent, en particulier évalué avec une qualité suffisante, ne se trouve à l'intérieur d'une zone environnante prédéfinie (7, 8) autour des points de détection.

11. Procédé selon la revendication 9 ou 10,
**caractérisé en ce que**

qu'un point de détection préclassifié comme étant statique est modifié en point de détection dynamique dans une étape d'évaluation suivante supplémentaire si à l'étape d'évaluation suivante, en particulier dans une étape d'évaluation suivante effectuant une évaluation sur la base d'un cycle de détection supplémentaire suivant l'étape de classification comme point de détection statique, un objet dynamique initialisé avec une qualité dépassant une valeur seuil de qualité est identifié à l'intérieur d'une zone environnante autour du point de détection.

12. Procédé selon l'une quelconque des revendications précédentes,
**caractérisé en ce que**

dans un, en particulier dans chaque cycle de détection dans lequel un point de détection pour l'évaluation si un objet est dynamique est associé et l'objet est caractérisé comme étant dynamique, une qualité de déclaration concernant la présence réelle d'un objet dynamique (12) augmente, et l'état d'évaluation au sujet de l'objet est mis à jour.

13. Procédé selon l'une quelconque des revendications précédentes,
**caractérisé en ce que**

qu'un objet est évalué comme étant réellement dynamique s'il est préclassifié comme étant dynamique avec un nombre, en particulier supérieur ou égal à 5, supérieur à une valeur seul de nombre de classification.

14. Procédé selon l'une quelconque des revendications précédentes,
**caractérisé en ce que**

qu'un point de détection (15) d'un cycle de détection est pris en considération dans au moins un cycle de détection suivant pour l'évaluation de la dynamique d'au moins deux objets différents.

**15.** Procédé selon l'une quelconque des revendications précédentes,
**caractérisé en ce que**
qu'un objet détecté par l'équipement de détection à ultrasons (4) et évalué comme étant un objet dynamique (12) est inscrit sur une carte de zone environnante (10) représentant la zone environnante (7, 8).

**16.** Procédé selon l'une quelconque des revendications précédentes,
**caractérisé en ce que**
lors d'une évaluation d'une place de stationnement pour stationner le véhicule automobile (1), l'évaluation d'un objet identifié en tant qu'objet dynamique (12) est prise en considération, et la place de stationnement est identifiée comme étant appropriée si l'objet dynamique (12) est détecté dans la place de stationnement.

**17.** Procédé selon l'une quelconque des revendications précédentes,
**caractérisé en ce que**
l'équipement de détection à ultrasons (4) est réalisé avec au moins deux capteurs à ultrasons (5a à 5f, 6a à 6f), et dans un cycle de détection, une émission unique d'un signal ultrasonore d'un premier capteur à ultrasons (5a à 5f, 6a à 6f) et la réception du signal d'écho réfléchi par un objet (12, 13, 14) sont effectuées par le deuxième capteur à ultrasons (5a à 5f, 6a à 6f), et l'émission d'un signal ultrasonore du deuxième capteur à ultrasons (5a à 5f, 6a à 6f) et la réception du signal d'écho réfléchi par un objet sont effectuées par le premier capteur à ultrasons (5a à 5f, 6a à 6f).

**18.** Procédé selon l'une quelconque des revendications précédentes,
**caractérisé en ce que**
le modèle d'évaluation effectue une gestion d'objet, dans lequel dans les cycles de détection, des points de détection classifiés comme étant dynamiques sont attribués à au moins un objet dynamique (12), et ainsi au moins un nouvel objet dynamique est initialisé et/ou un objet rejeté en tant qu'objet dynamique est supprimé.

**19.** Procédé selon la revendication 18,
**caractérisé en ce que**
lors de l'initialisation, seuls des points de détection dynamiques sont pris en compte pour la classification d'un objet en tant qu'objet dynamique (12) qui dépassent une valeur seuil de qualité.

**20.** Procédé selon l'une quelconque des revendications précédentes,
**caractérisé en ce que**
qu'un chemin de mouvement supplémentaire d'un objet au moins préclassifié en tant qu'objet dynamique (12) est prédéterminé par le modèle d'évaluation.

**21.** Système d'aide au stationnement (2) pour un véhicule automobile (1), comprenant un équipement de détection à ultrasons (4) et un équipement d'évaluation (3) qui est réalisé pour effectuer un procédé selon l'une quelconque des revendications précédentes.

Fig.1

8'

7'

2'

1'

10'

Fig.2

12

2

11

8

7

13

14

1

10

Fig.3

Fig.4

Fig.5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010034142 A1
- EP 2908153 A2

- EP 2881755 A1